# EUROPEAN PATENT APPLICATION

(11) **EP 3 753 980 A1**
(43) Date of publication of application: **23.12.2020**
(21) Application number: 19180465.7
(22) Date of filing: 17.06.2019
(51) Int. Cl.: C08K 7/02, C08K 9/08, C08K 3/26, C08K 5/09, C08K 5/092, C08K 5/521, C08K 9/04, C08L 51/06

(54) **CACO3 COATED WITH MALEIC ANHYDRIDE GRAFTED POLYETHYLENE AND/OR MALEIC ANHYDRIDE GRAFTED POLYPROPYLENE AND AT LEAST ONE HYDROPHOBIZING AGENT**

(71) Applicant: Omya International AG, 4665 Oftringen (CH)
(72) Inventor: WELKER, Matthias, 68220 Hésingue (FR); BARANGER, Joris, 68730 Blotzheim (FR); RENTSCH, Samuel, 3095 Spiegel bei Bern (CH)
(74) Representative: Maiwald Patent- und Rechtsanwaltsgesellschaft mbH

(57) **Abstract**

The present invention refers to a surface treated filler material product comprising a) at least one calcium carbonate-containing filler material and b) a treatment layer on the surface of the at least one calcium carbonate-containing filler material comprising i. maleic anhydride grafted polyethylene and/or maleic anhydride grafted polypropylene and ii. at least one hydrophobizing agent. Furthermore, a process for preparing the inventive surface treated filler material product is disclosed, as well as a polymer composition comprising at least one polymeric resin and the inventive surface treated filler material product. Additionally, a fiber and/or filament and/or film and/or thread and/or sheet and/or pipe and/or profile and/or mold and/or, injection molded compound and/or blow molded compound comprising the inventive surface treated filler material product is disclosed as well as the use of the inventive surface treated mineral filler product in a polymer composition, for improving the mechanical and/or rheological properties of the polymer composition.

## Description

The present invention refers to a surface treated filler material product comprising a) at least one calcium carbonate-containing filler material and b) a treatment layer on the surface of the at least one calcium carbonate-containing filler material comprising i. maleic anhydride grafted polyethylene and/or maleic anhydride grafted polypropylene and ii. at least one hydrophobizing agent. Furthermore, a process for preparing the inventive surface treated filler material product is disclosed, as well as a polymer composition comprising at least one polymeric resin and the inventive surface treated filler material product. Additionally, a fiber and/or filament and/or film and/or thread and/or sheet and/or pipe and/or profile and/or mold and/or, injection molded compound and/or blow molded compound comprising the inventive surface treated filler material product is disclosed as well as the use of the inventive surface treated mineral filler product in a polymer composition, for improving the mechanical and/or rheological properties of the polymer composition.

In practice, filler materials and especially calcium carbonate-containing filler materials are often used as particulate fillers in thermoplastic polymer products, like fibers, filaments, films and/or threads, usually made of polyethylene (PE), polypropylene (PP), polyurethane (PU), polyvinylchloride (PVC), polyester (PES) and/or polyamide (PA). However, additives are introduced to provide the filler material with a coating and to improve the dispersion of said mineral filler material in the polymer matrix of polymer compositions as well as possibly to improve the processability of this polymer composition and/or properties of the final application products such as fibers, filaments, films, threads, sheets, profiles, molds, injection molded compounds, blow molded compounds. An elimination of such additives would unacceptably reduce the resulting fiber, filament, film, thread, sheets, molds, injection molded compounds, blow molded compounds quality. Furthermore, it is desired to provide a filler material with a good flowability in order to ensure a high productivity when manufacturing the final treated mineral filler material product and further processing said product into final application products.

In the art, several attempts have been made to improve the applicability of mineral filler materials and especially calcium carbonate-containing mineral filler materials, e.g. by treating such mineral filler materials with surface treatment agents such as hydrophobizing agents.

For instance, WO 00/20336 relates to an ultrafine natural calcium carbonate, which may optionally be treated with one or several fatty acids or one or several salts or mixtures thereof as hydrophobizing agent, and which is used as a rheology regulator for polymer compositions.

Likewise, US 4,407,986 relates a precipitated calcium carbonate that is surface-treated with a dispersant that may include higher aliphatic acids and their metal salts in order to limit the addition of lubricant additives when kneading this calcium carbonate with crystalline polypropylene and to avoid the formation of calcium carbonate aggregates that limit the impact strength of the polypropylene.

EP 0 998 522 relates to surface treated calcium carbonate filler for breathable films using fatty acids of at least 10 carbon atoms wherein the filler before and after the treatment process has to be mostly free of moisture in the range of below 0.1 wt.-%.

In EP 0 325 114, relating to non-sagging underseal compositions for motor vehicles based on polyvinyl chloride which has improved rheological and adhesion properties, Example 7 discloses a mixture of an ammonium salt of 12-hydroxystearic acid in combination with a fatty acid (in a weight ratio of 1:1) used to treat a mineral filler.

WO 03/082966 relates to a cross-linkable and/or cross-linked nanofiller composition which, in optional embodiments, may additionally include fillers that may or may not be coated with hydrophobizing agents such as stearic acid, stearate, silane, siloxane and/or titanate. Such nanofiller compositions are used to increase barrier properties, strength and heat distortion temperatures, making them useful in medical, automotive, electrical, construction and food application.

US 2002/0102404 describes dispersible calcium carbonate particles coated on their surface with a combination of saturated and unsaturated aliphatic carboxylic acids and salts thereof along with an organic compound such as a phthalic ester, which are used in adhesive compositions to improve viscosity stability and adhesion properties.

Moreover, US 2002/0102404 requires the implementation of a mixture of saturated and unsaturated aliphatic carboxylic acids/salts. The presence of unsaturated aliphatic carboxylic acids/salts increases the risk of unwanted in situ side reactions with the double bond during processing of any unsaturated aliphatic carboxylic acid/salt-comprising material. Additionally, the presence of unsaturated aliphatic carboxylic acids/salts may result in discoloration of, or unwanted odour development, and notably rancid odours, in the material in which they are implemented.

US 4,520,073 describes mineral filler materials with improved hydrophobic coatings prepared by pressure coating of porous minerals using steam as a carrier for the coating material. Said coating material may be selected, among other options, from long chain aliphatic fatty acids and their salts.

WO 2008/077156 A2 relates to spunlaid fibers comprising at least one polymeric resin and at least one filler having an average particle size of less than or equal to about 5 microns and/or having a top cut of less than about 15 microns, wherein the at least one filler is present in an amount of less than about 40% by weight, relative to the total weight of the spunlaid fibers. The coating of the filler is described as being at least one organic material chosen from fatty acids and salts and esters thereof, e.g. stearic acid, stearate, ammonium stearate and calcium stearate.

GB 2 336 366 A relates to filled thermoplastic compositions, and, in particular, filled low density polyethylene compositions which are to be formed into products or articles by the process of extrusion. It is further described that the hydrophobising agent is preferably an organic carboxylic acid or partially or fully neutralised salt thereof which has at least one saturated or unsaturated hydrocarbon chain having from 8 to 28 carbon atoms, if the particulate mineral filler has a neutral to alkaline surface reaction, for example calcium carbonate.

EP2159258A1 relates to a treated mineral filler product comprising: a) at least one mineral filler; b) a treatment layer located on the surface of said mineral filler(s), said treatment layer comprising: at least one saturated C8 to C24 aliphatic carboxylic acid; and at least one di and/or trivalent cation salt of one or more saturated C8 to C24 aliphatic carboxylic acid; characterized in that: the weight ratio of all of said aliphatic carboxylic acid salt(s) : all of said aliphatic carboxylic acid(s) is from 51:49 to 75:25; and said treatment layer is present in an amount of at least 2.5 mg/m² of said mineral filler.

Another hydrophobizing agent currently of choice and of particular relevance is a mono-substituted succinic anhydride or a mixture of mono-substituted succinic anhydrides.

For example, WO 2014/060286 A1 refers to a process for preparing a surface treated filler material product with succinic anhydride(s), the process comprising at least the steps of a) providing at least one calcium carbonate-containing filler material and b) providing at least one mono-substituted succinic anhydride and contacting the surface of the at least one calcium carbonate-containing filler material of step a) with the at least one mono-substituted succinic anhydride of step b).

WO 2016/023937 A1 refers to a process for producing a breathable film. The surface-treated filler material product comprises A) at least one ground calcium carbonate-comprising filler material, and B) a treatment layer on the surface of the at least one wet ground calcium carbonate-comprising filler material comprising at least one mono-substituted succinic anhydride and/or at least one mono-substituted succinic acid and/or salty reaction product(s) thereof.

However, there is still a need for providing improved surface treated filler material products. Especially, it is desired to provide surface treated filler material products that have a good powder flowability but also a low moisture pick-up susceptibility. Furthermore, it is desired to provide surface treated filler material products that can be used in polymer compositions to maintain or improve the mechanical and/or rheological properties such as the melt flow rate and/or the top load properties and/or the impact strength and/or the flexural modulus and/or the tensile properties such as the strength at yield of the polymer composition and/or of the final application products such as a fiber and/or filament and/or film and/or thread and/or sheet and/or pipe and/or profile and/or mold and/or injection molded compounds and/or blow molded compounds comprising such surface treated filler material products.

Accordingly, it is an objective of the present invention to provide a surface treated filler material product which comprises a hydrophobizing agent and shows a good powder flowability as well as a low moisture pick up. Additionally, it is another objective of the present invention to provide such surface treated filler material products which can be used in polymer compositions to maintain or improve the mechanical and/or rheological properties such as the melt flow rate and/or the top load properties and/or the impact strength and/or the flexural modulus and/or the tensile properties such as the strength at yield of the polymer composition and/or of the final application products. A further objective is to provide a process for preparing such a surface treated filler material product. Further objectives can be gathered from the following description of the invention.

The foregoing and other objectives are solved by the subject-matter as defined herein in claim 1.

Advantageous embodiments of the inventive a process for preparing a surface treated filler material product are defined in the corresponding sub-claims.

According to one aspect of the present application a surface treated filler material product is provided comprising
a) at least one calcium carbonate-containing filler material,
b) a treatment layer on the surface of the at least one calcium carbonate-containing filler material comprising
   i. maleic anhydride grafted polyethylene and/or maleic anhydride grafted polypropylene and
   ii. at least one hydrophobizing agent
   wherein the surface treated filler material product comprises the treatment layer in an amount of from 0.2 to 7 wt.-%, based on the total dry weight of the at least one calcium carbonate-containing filler material.

The inventors surprisingly found out that the foregoing surface treated filler material products have good powder flowability but also a low moisture pick-up susceptibility. Furthermore, when the inventive surface treated filler material products are used in polymer compositions they maintain or improve the mechanical and/or rheological properties of the polymer composition and/or of the final application products, especially in comparison to a surface treated filler material product being surface treated only with an identical hydrophobizing agent. The polymer composition and/or of the final application products comprising the inventive surface treated filler material products especially have a maintained or lower melt flow rate and/or maintained or higher top-load properties, maintained or higher impact strength and/or maintained or higher flexural modulus and/or maintained or higher tensile properties such as strength at yield - in particular in comparison with a polymer composition and/or final application product comprising a surface treated filler material product being surface treated only with an identical hydrophobizing agent.

According to another aspect of the present invention a process for preparing a surface treated filler material product is provided, the process comprising at least the steps of:
a) providing at least one calcium carbonate-containing filler material,
b) providing
   i. maleic anhydride grafted polyethylene and/or maleic anhydride grafted polypropylene and
   ii. at least one hydrophobizing agent and
c) forming a treatment layer on the surface of the at least one calcium carbonate-containing filler material by contacting the surface of the at least one calcium carbonate-containing filler material of step a), under mixing, in one or more steps, in any order, with 0.2 to 7 wt.-% of maleic anhydride grafted polyethylene and/or maleic anhydride grafted polypropylene of step i) and at least one hydrophobizing agent of step ii), based on the total dry weight of the at least one calcium carbonate-containing filler material, wherein the treatment layer comprises maleic anhydride grafted polyethylene and/or maleic anhydride grafted polypropylene of step i) and at least hydrophobizing agent of step ii).

The inventors surprisingly found out that by the foregoing process it is possible to provide surface treated filler material products that comprise both, a maleic anhydride grafted polyethylene and/or maleic anhydride grafted polypropylene and at least one hydrophobizing agent on the surface of the filler material. Furthermore, the above process is simple and economic and leads to the inventive surface treated filler material products as mentioned above.

According to another aspect of the present invention a polymer composition is provided comprising at least one polymeric resin and from 1 to 95 wt.-%, based on the total weight of the polymer composition, of a surface treated filler material product as defined above.

According to another aspect of the present invention a fiber and/or filament and/or film and/or thread and/or sheet and/or pipe and/or profile and/or mold and/or, injection molded compound and/or blow molded compound is provided comprising the surface treated filler material product as defined above and/or a polymer composition as defined above.

According to another aspect of the present invention the surface treated mineral filler product as defined above is used in a polymer composition, preferably a polyethylene or polypropylene composition, for improving the mechanical and/or rheological properties of the polymer composition, in comparison to the same polymer composition that has been treated the same way, wherein the surface treated mineral filler product has merely been treated with at least one hydrophobizing agent.

Advantageous embodiments of the above aspects are defined in the corresponding sub-claims.

According to one embodiment of the present invention, the at least one hydrophobizing agent is selected from the group consisting of succinic anhydrides, carboxylic acids, phosphoric acid mono-esters, phosphoric acid di-esters, reaction products thereof and mixtures thereof.

According to another embodiment of the present invention, the at least one hydrophobizing agent is at least one of
mono-substituted succinic anhydride and/or reaction product(s) thereof and aliphatic linear and/or branched carboxylic acid(s) having from 8 to 24 carbon atoms and/or reaction product(s) thereof.

According to another embodiment of the present invention, the mono-substituted succinic anhydride and/or reaction product(s) thereof of step ii) consist(s) of succinic anhydride mono-substituted with a group selected from a linear, branched, aliphatic and cyclic group having from 2 to 30 carbon atoms, preferably from 3 to 25 and most preferably from 4 to 20 in the substituent.

According to another embodiment of the present invention, the mono-substituted succinic anhydride and/or reaction product(s) thereof of step ii) is/are
a) at least one alkyl mono-substituted succinic anhydride, preferably at least one alkyl mono-substituted succinic anhydride selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof, and/or
b) at least one alkenyl mono-substituted succinic anhydride, preferably at least one alkenyl mono-substituted succinic anhydride selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

According to another embodiment of the present invention, the aliphatic linear and/or branched carboxylic acid(s) and/or reaction product(s) thereof of step ii) have from 8 to 22 carbon atoms, preferably from 10 to 22, more preferably from 12 to 20 even more preferably from 14 to 20 and most preferably the aliphatic linear and/or branched carboxylic acid(s) and/or reaction product(s) thereof is stearic acid, palmitic acid or mixtures thereof.

According to another embodiment of the present invention, the calcium carbonate-containing filler material of step a) is selected from the group consisting of ground calcium carbonate, preferably marble, limestone, dolomite and/or chalk and/or, precipitated calcium carbonate (PCC), preferably vaterite, calcite and/or aragonite, more preferably the calcium carbonate-containing filler material is ground calcium carbonate.

According to another embodiment of the present invention, the at least one calcium carbonate-containing filler material of step a) has
a) a weight median particle size *d*₅₀ value in the range from 0.1 µm to 7 µm, preferably from 0.25 µm to 5 µm and most preferably from 0.5 µm to 4 µm, and/or
b) a top cut (*d*₉₈) of ≤ 100 µm, preferably ≤ 40 µm, more preferably ≤ 25 µm and most preferably ≤ 15 µm, and/or
c) a specific surface area (BET) of from 0.5 to 150 m²/g, preferably from 0.5 to 50 m²/g, more preferably from 0.5 to 35 m²/g and most preferably from 0.5 to 10 m²/g as measured by the BET nitrogen method, and/or
d) a residual total moisture content of from 0.01 wt.-% to 1 wt.-%, preferably from 0.01 to 0.2 wt.-%, more preferably from 0.02 to 0.1 wt.-% and most preferably from 0.03 to 0.2 wt.-%, based on the total dry weight of the at least one calcium carbonate-containing filler material.

According to another embodiment of the present invention, the maleic anhydride grafted polyethylene and/or maleic anhydride grafted polypropylene of step i) is selected from the group consisting of maleic anhydride grafted low density polyethylene (LDPE), maleic anhydride grafted linear low density polyethylene (LLDPE), maleic anhydride grafted high density polyethylene (HDPE), maleic anhydride grafted atactic polypropylene, maleic anhydride grafted isotactic polypropylene, maleic anhydride grafted syndiotactic polypropylene, maleic anhydride grafted polyethylene wax, maleic anhydride grafted polypropylene wax and mixtures thereof and preferably is maleic anhydride grafted linear low density polyethylene (LLDPE) and maleic anhydride grafted polyethylene wax and most preferably is maleic anhydride grafted polyethylene wax .

According to another embodiment of the present invention, the surface treated filler material product is in form of a powder.

According to another embodiment of the present invention, in the process for preparing the surface treated filler material product, the at least one calcium carbonate-containing filler material of step a) is preheated before contacting step c) is carried out, preferably the at least one calcium carbonate-containing filler material of step a) is preheated at a temperature of from 20 to 250 °C, more preferably of from 40 to 200 °C, even more preferably of from 50 to 150 °C and most preferably of from 60 to 140 °C.

According to another embodiment of the present invention, in the process for preparing the surface treated filler material product, contacting step c) is carried out in that the maleic anhydride grafted polyethylene and/or maleic anhydride grafted polypropylene of step i) and the at least one hydrophobizing agent of step ii) are added in a weight ratio of from 10:1 to 1:10, preferably from 5:1 to 1:5 and most preferably from 4:1 to 1:4, such as in an amount of 1:1.

According to another embodiment of the present invention, in the process for preparing the surface treated filler material product, the maleic anhydride grafted polyethylene and/or maleic anhydride grafted polypropylene of step i) is added in contacting step c) in a total amount of from 0.1 to 4 wt.-%, preferably of from 0.2 to 3 wt.-% and most preferably of from 0.5 to 2 wt.-%, based on the total dry weight of the at least one calcium carbonate-containing filler material of step a); and at least one hydrophobizing agent of step ii) is added in contacting step c) in a total amount of from 0.1 to 3 wt.-%, preferably of from 0.2 to 2 wt.-% and most preferably of from 0.3 to 1 wt.-%, based on the total dry weight of the at least one calcium carbonate-containing filler material of step a).

According to another embodiment of the present invention, in the process for preparing the surface treated filler material product, contacting step c) is carried out at a temperature of from 20 to 250 °C, preferably of from 60 to 180 °C and most preferably of from 80 to 150 °C.

According to another embodiment of the present invention, in the process for preparing the surface treated filler material product, contacting step c) is carried out in that the maleic anhydride grafted polyethylene and/or maleic anhydride grafted polypropylene of step i) and at least one hydrophobizing agent of step ii) are added simultaneously or successively and preferably are added simultaneously, with the provision that if the compounds are added successively, the addiction of the first compound does not lead to a complete coverage of the surface of the at least one calcium carbonate-containing filler material.

According to another embodiment of the present invention, the polymer composition further comprises natural fibers, preferably wood fibers, cellulose fibers, hemp fibers and/or agricultural waste fibers and/or synthetic fibers, preferably glass fibers, carbon fibers and/or aramid fibers.

It should be understood that for the purposes of the present invention, the following terms have the following meanings:
For the purpose of the present invention, the term "filler material" in the meaning of the present invention refers to substances of mineral origin added to materials such as paper, plastics, rubber, paints and adhesives, etc. to lower the consumption of more expensive materials such as binders, or to enhance technical properties of the products. The person skilled in the art very well knows the typical filler materials used in the respective fields. Furthermore, the term "calcium carbonate-containing filler material" refers to a material that comprises at least 80 wt.-% calcium carbonate, based on the total dry weight of the calcium carbonate-containing filler material.

The term "surface treated filler material product" in the meaning of the present invention refers to a calcium carbonate-containing filler material which has been contacted with a surface treatment agent such as to obtain a coating layer on at least a part of the surface of the calcium carbonate-containing filler material.

A "treatment layer" in the gist of the present invention refers to a layer, preferably a monolayer of a treatment agent on the surface of the surface treated filler material product. The "treatment layer" comprises a maleic anhydride grafted polyethylene and/or maleic anhydride grafted polypropylene and at least one hydrophobizing agent, wherein the surface treated filler material product comprises the treatment layer in an amount of from 0.2 to 7 wt.-%, based on the total dry weight of the at least one calcium carbonate-containing filler material.

The term "dry" calcium carbonate-containing filler material is understood to be a filler material having less than 1.0 % by weight of water relative to the filler material weight. The % water (equal to residual total moisture content) is determined according to the Coulometric Karl Fischer measurement method, wherein the filler material is heated to 220 °C, and the water content released as vapour and isolated using a stream of nitrogen gas (at 100 ml/min) is determined in a Coulometric Karl Fischer unit.

A "specific surface area (SSA)" of a calcium carbonate-containing filler material in the meaning of the present invention is defined as the surface area of the calcium carbonate-containing filler material divided by its mass. As used herein, the specific surface area is measured by nitrogen gas adsorption using the BET isotherm (ISO 9277:2010) and is specified in m²/g.

The "particle size" of particulate materials, for example the surface treated filler material product herein is described by its distribution of particle sizes *dₓ*. Therein, the value *dₓ* represents the diameter relative to which x % by weight of the particles have diameters less than *dₓ*. This means that, for example, the *d*₂₀ value is the particle size at which 20 wt.-% of all particles are smaller than that particle size. The d₅₀ value is thus the weight median particle size, i.e. 50 wt.-% of all grains are bigger and the remaining 50 wt.-% are smaller than this particle size. For the purpose of the present invention the particle size is specified as weight median particle size *d*₅₀ unless indicated otherwise. The *d*₉₈ value is the particle size at which 98 wt.-% of all particles are smaller than that particle size. The *d*₉₈ value is also designated as "top cut". Particle sizes were determined by using a Sedigraph™5100 or 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇. The samples were dispersed using a high speed stirrer and sonicated.

For the purpose of the present invention, the "viscosity" , for example, the viscosity of the maleic anhydride grafted polyethylene and the maleic anhydride grafted polypropylene is measured with a rotational rheometer according to DIN 53019.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

When in the following reference is made to the surface treated filler material product it is to be understood that the preferred embodiments and technical details also refer to the inventive process, the inventive polymer composition, the inventive products comprising the surface treated filler material product and/or polymer composition und the inventive use.

### The surface treated filler material product

As set out above, the inventive surface treated filler material product comprises a) at least one calcium carbonate-containing filler material and b) a treatment layer on the of the at least one calcium carbonate-containing filler material comprising i) maleic anhydride grafted polyethylene and/or maleic anhydride grafted polypropylene and ii) at least one hydrophobizing agent, wherein the surface treated filler material product comprises the treatment layer in an amount of from 0.2 to 7 wt.-%, based on the total dry weight of the at least one calcium carbonate-containing filler material. In the following, it is referred to further details of the present invention and especially the foregoing compounds of the surface treated filler material product.

### Characterization of the at least one calcium carbonate-containing filler material

According to step a) of the present invention, the surface treated filler material product comprises a) at least one calcium carbonate-containing filler material.

The expression "at least one" calcium carbonate-containing filler material means that one or more, for example, two or three calcium carbonate-containing filler material may be provided. According to a preferred embodiment, the at least one calcium carbonate-containing filler material comprises only one calcium carbonate-containing filler material is provided in step a).

According to a preferred embodiment of the present invention the calcium carbonate-containing filler material is selected from the group consisting of ground calcium carbonate (GCC), preferably marble, limestone, dolomite and/or chalk, precipitated calcium carbonate (PCC), preferably vaterite, calcite and/or aragonite, more preferably the at least one calcium carbonate-containing filler material is ground calcium carbonate.

GCC is understood to be a naturally occurring form of calcium carbonate, mined from sedimentary rocks such as limestone or chalk, or from metamorphic marble rocks and processed through a treatment such as grinding, screening and/or fractionizing in wet and/or dry form, for example by a cyclone or classifier. In one embodiment of the present invention, the GCC is selected from the group comprising marble, chalk, dolomite, limestone and mixtures thereof.

By contrast, calcium carbonate of the PCC type includes synthetic calcium carbonate products obtained by carbonation of a slurry of calcium hydroxide, commonly referred to in the art as a slurry of lime or milk of lime when derived from finely divided calcium oxide particles in water or by precipitation out of an ionic salt solution. PCC may be rhombohedral and/or scalenohedral and/or aragonitic; preferred synthetic calcium carbonate or precipitated calcium carbonate comprising aragonitic, vateritic or calcitic mineralogical crystal forms or mixtures thereof.

In one preferred embodiment, the at least one calcium carbonate-containing filler material is ground calcium carbonate and preferably marble.

It is appreciated that the amount of calcium carbonate in the at least one calcium carbonate-containing filler material is at least 80 wt.-%, e.g. at least 95 wt.-%, preferably between 97 and 100 wt.-%, more preferably between 98.5 and 99.95 wt.-%, based on the total dry weight of the at least one calcium carbonate-containing filler material.

The at least one calcium carbonate-containing filler material is preferably in the form of a particulate material, and may have a particle size distribution as conventionally employed for the material(s) involved in the type of product to be produced. In general, it is preferred that the at least one calcium carbonate-containing filler material has a weight median particle size *d*₅₀ value in the range from 0.1 to 7 µm. For example, the at least one calcium carbonate-containing filler material has a weight median particle size *d*₅₀ from 0.25 µm to 5 µm and preferably from 0.5 µm to 4 µm.

Additionally or alternatively, the at least one calcium carbonate-containing filler material has a top cut (*d*₉₈) of ≤ 100 µm. For example, the at least one calcium carbonate-containing filler material has a top cut (*d*₉₈) of ≤ 40 µm, preferably of ≤ 25 µm and most preferably of ≤ 15 µm.

Additionally or alternatively the at least one calcium carbonate-containing filler material has a BET specific surface area of from 0.5 and 150 m²/g as measured by the BET nitrogen method. For example, the at least one calcium carbonate-containing filler material has a specific surface area (BET) of from 0.5 to 50 m²/g, more preferably of from 0.5 to 35 m²/g and most preferably of from 0.5 to 10 m²/g as measured by the BET nitrogen method.

Additionally or alternatively, the at least one calcium carbonate-containing filler material has a residual total moisture content of from 0.01 to 1 wt.-%, preferably from 0.01 to 0.2 wt.-%, more preferably from 0.02 to 0.2 wt.-% and most preferably from 0.03 to 0.2 wt.-%, based on the total dry weight of the at least one calcium carbonate-containing filler material.

Thus, it is preferred that the at least one calcium carbonate-containing filler material has
a) a weight median particle size *d*₅₀ value in the range from 0.1 µm to 7 µm, preferably from 0.25 µm to 5 µm and most preferably from 0.5 µm to 4 µm, and/or
b) a top cut (*d*₉₈) of ≤ 100 µm, preferably ≤ 40 µm, more preferably ≤ 25 µm and most preferably ≤ 15 µm, and/or
c) a specific surface area (BET) of from 0.5 to 150 m²/g, preferably from 0.5 to 50 m²/g, more preferably from 0.5 to 35 m²/g and most preferably from 0.5 to 10 m²/g as measured by the BET nitrogen method and/or
d) a residual total moisture content of from 0.01 to 1 wt.-%, preferably from 0.01 to 0.2 wt.-%, more preferably from 0.02 to 0.2 wt.-% and most preferably from 0.03 to 0.2 wt.-%, based on the total dry weight of the at least one calcium carbonate-containing filler material.

For example, the at least one calcium carbonate-containing filler material has
a) a weight median particle size *d*₅₀ value in the range from 0.1 µm to 7 µm, preferably from 0.25 µm to 5 µm and most preferably from 0.5 µm to 4 µm, or
b) a top cut (*d*₉₈) of ≤ 100 µm, preferably ≤ 40 µm, more preferably ≤ 25 µm and most preferably ≤ 15 µm, or
c) a specific surface area (BET) of from 0.5 to 150 m²/g, preferably from 0.5 to 50 m²/g, more preferably from 0.5 to 35 m²/g and most preferably from 0.5 to 10 m²/g as measured by the BET nitrogen method or
d) a residual total moisture content of from 0.01 to 1 wt.-%, preferably from 0.01 to 0.2 wt.-%, more preferably from 0.02 to 0.2 wt.-% and most preferably from 0.03 to 0.2 wt.-%, based on the total dry weight of the at least one calcium carbonate-containing filler material.

Alternatively, the at least one calcium carbonate-containing filler material has
a) a weight median particle size *d*₅₀ value in the range from 0.1 µm to 7 µm, preferably from 0.25 µm to 5 µm and most preferably from 0.5 µm to 4 µm, and
b) a top cut (*d*₉₈) of ≤ 100 µm, preferably ≤ 40 µm, more preferably ≤ 25 µm and most preferably ≤ 15 µm, and
c) a specific surface area (BET) of from 0.5 to 150 m²/g, preferably from 0.5 to 50 m²/g, more preferably from 0.5 to 35 m²/g and most preferably from 0.5 to 10 m²/g as measured by the BET nitrogen method and
d) a residual total moisture content of from 0.01 to 1 wt.-%, preferably from 0.01 to 0.2 wt.-%, more preferably from 0.02 to 0.2 wt.-% and most preferably from 0.03 to 0.2 wt.-%, based on the total dry weight of the at least one calcium carbonate-containing filler material.

In one embodiment of the present invention, the at least one calcium carbonate-containing filler material has a median particle size diameter *d*₅₀ value from 0.1 µm to 7 µm, preferably from 0.25 µm to 5 µm and most preferably from 0.5 µm to 4 µm, for example, about 1.9 µm and has a top cut (*d*₉₈) of ≤ 100 µm, preferably ≤ 40 µm, more preferably ≤ 25 µm and most preferably ≤ 15 µm, for example 5.8 µm. According to a preferred embodiment the at least one calcium carbonate-containing filler material is a ground calcium carbonate.

It is preferred that the at least one calcium carbonate-containing filler material is a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case the at least one calcium carbonate-containing filler material is a wet ground calcium carbonate-containing filler material, the grinding step may be performed under conditions such that autogenous grinding takes place and/or by horizontal ball milling, and/or other such processes known to the skilled man. The wet processed ground calcium carbonate-containing filler material thus obtained may be washed and dewatered by well known processes, e.g. by flocculation, filtration or forced evaporation prior to drying. The subsequent step of drying may be carried out in a single step such as spray drying, or in at least two steps, e.g. by applying a first heating step to the calcium carbonate-containing filler material in order to reduce the associated moisture content to a level which is not greater than about 1 wt.-%, based on the total dry weight of the at least one calcium carbonate-containing filler material. The residual total moisture content of the filler can be measured by the Karl Fischer coulometric titration method, desorbing the moisture in an oven at 195°C and passing it continuously into the KF coulometer (Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the at least one calcium carbonate-containing filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the at least one calcium carbonate-containing filler material is subjected to a beneficiation step (such as a flotation, bleaching or magnetic separation step) to remove impurities.

In one embodiment of the present invention, the at least one calcium carbonate-containing filler material comprises a dry ground calcium carbonate-containing filler material. In another preferred embodiment, the at least one calcium carbonate-containing filler material is a material being wet ground in a horizontal ball mill, and subsequently dried by using the well-known process of spray drying.

For example, in case the at least one calcium carbonate-containing filler material is a wet ground and spray dried calcium carbonate, the residual total moisture content of the at least one calcium carbonate-containing filler material is preferably from 0.01 to 1 wt.-%, preferably from 0.01 to 0.2 wt.-%, more preferably from 0.02 to 0.2 wt.-% and most preferably from 0.03 to 0.2 wt.-%, based on the total dry weight of the at least one calcium carbonate-containing filler material and the at least one calcium carbonate-containing filler material has a median particle size diameter *d*₅₀ value from 0.1 µm to 7 µm, preferably from 0.25 µm to 5 µm and most preferably from 0.5 µm to 4 µm, for example, about 1.9 µm and has a top cut (*d*₉₈) of ≤ 100 µm, preferably ≤ 40 µm, more preferably ≤ 25 µm and most preferably ≤ 15 µm, for example 5.8 µm.

### Characterization of the treatment layer on the surface of the at least one calcium carbonate-containing filler material

According to step b) of the present invention the surface treated filler material product comprises a treatment layer on the surface of the at least one calcium carbonate-containing filler material.

The surface treatment layer comprises i) maleic anhydride grafted polyethylene and/or maleic anhydride grafted polypropylene and ii) at least one hydrophobizing agent.

### • The maleic anhydride grafted polyethylene and/or maleic anhydride grafted polypropylene

The term "maleic anhydride grafted polyethylene" refers to polyethylene backbone that has been grafted with maleic anhydride and the term "maleic anhydride grafted polypropylene" refers to polypropylene backbone that has been grafted with maleic anhydride.

Polyethylene in the meaning of the present invention refers to a polymer comprising ethylene units. Polypropylene in the meaning of the present invention refers to a polymer comprising propylene units.

According to one embodiment of the present invention the polyethylene and/or polypropylene may be selected from the group consisting of low density polyethylene (LDPE), linear low density polyethylene (LLDPE), high density polyethylene (HDPE), atactic polypropylene, isotactic polypropylene, syndiotactic polypropylene, polyethylene wax, polypropylene wax and mixtures thereof and preferably is linear low density polyethylene (LLDPE) and polyethylene wax and most preferably is polyethylene wax.

According to one embodiment of the present invention the polyethylene backbone comprises only one polymer. According to another embodiment the polyethylene backbone comprises two or more different polymers selected from the groups consisting of low density polyethylene (LDPE), linear low density polyethylene (LLDPE), high density polyethylene (HDPE) and polyethylene wax.

According to a preferred embodiment the polyethylene backbone consist only of one polymer and preferably is polyethylene wax.

According to one embodiment of the present invention the polypropylene backbone comprises only one polymer. According to another embodiment the polypropylene backbone comprises two or more different polymers selected from the groups consisting of atactic polypropylene, isotactic polypropylene, syndiotactic polypropylene, and polypropylene wax.

According to a preferred embodiment the polypropylene backbone consist only of one polymer and preferably is polypropylene wax.

The term "maleic anhydride" in the meaning of the present invention refers to an organic compound with the formula C₂H₂(CO)₂O and is the acid anhydride of maleic acid. The term "grafted" in the meaning of the present invention refers to a polymer that comprises a backbone, namely a polypropylene or polyethylene backbone and a composite, namely maleic anhydride, randomly distributed and attached to the backbone.

According to one embodiment of the present invention, the maleic anhydride grafted polyethylene and/or maleic anhydride grafted polypropylene of step i) is selected from the group consisting of maleic anhydride grafted low density polyethylene (LDPE), maleic anhydride grafted linear low density polyethylene (LLDPE), maleic anhydride grafted high density polyethylene (HDPE), maleic anhydride grafted atactic polypropylene, maleic anhydride grafted isotactic polypropylene, maleic anhydride grafted syndiotactic polypropylene, maleic anhydride grafted polyethylene wax, maleic anhydride grafted polypropylene wax and mixtures thereof and preferably is maleic anhydride grafted linear low density polyethylene (LLDPE) and maleic anhydride grafted polyethylene wax and most preferably is maleic anhydride grafted polyethylene wax.

In one embodiment of the present invention, the maleic anhydride grafted polyethylene and/or maleic anhydride grafted polypropylene have a melting temperature Tm of below 250 °C, more preferably of below 200 °C, like of below 170 °C. For example, the melting temperature of the maleic anhydride grafted polyethylene and/or maleic anhydride grafted polypropylene ranges from 50 to 250 °C, more preferably ranges from 75 to 200 °C and most preferably ranges from 100 to 170 °C.

Furthermore, it is appreciated that the maleic anhydride grafted polyethylene and/or maleic anhydride grafted polypropylene may have a melt flow rate MFR (190 °C) of from 0.1 to 3 000 g/10 min, more preferably of from 0.2 to 2 500 g/10 min. For example, the maleic anhydride grafted polyethylene and/or maleic anhydride grafted polypropylene has a melt flow rate MFR (190 °C) of from 0.3 to 2 000 g/10 min or from 0.3 to 1 600 g/10 min. Additionally or alternatively, the maleic anhydride grafted polyethylene and/or maleic anhydride grafted polypropylene has a melt flow rate MFR (230 °C) of from 0.1 to 3 000 g/10 min, more preferably of from 0.2 to 2 500 g/10 min. For example, the maleic anhydride grafted polyethylene and/or maleic anhydride grafted polypropylene has a melt flow rate MFR (230 °C) of from 0.3 to 2 000 g/10 min or from 0.3 to 1 600 g/10 min.

Additionally or alternatively, it is to be noted that the maleic anhydride grafted polyethylene and/or maleic anhydride grafted polypropylene have a viscosity of between 100 to 2000 mPa·s, preferably of between 150 to 1000 mPa·s and most preferably of between 200 to 500 mPa·s, at +140 °C (± 2 °C).

Additionally or alternatively, it is to be noted that the maleic anhydride grafted polyethylene and/or maleic anhydride grafted polypropylene have an acid value of between 10 to 200 mg KOH/g, preferably of between 30 to 80 mg KOH/g and most preferably of between 40 to 60 mg KOH/g. The acid value, also known as the neutralization number or acid number or acidity is the mass of potassium hydroxide (KOH) in milligrams that is required to neutralize one gram of a chemical substance, e.g. one gram of the dry maleic anhydride grafted polyethylene and/or maleic anhydride grafted polypropylene. In other words, the acid number is a measure of the number of carboxylic acid groups in a chemical compound. In a typical procedure, a known amount of sample is dissolved in an organic solvent (preferably isopropanol) and titrated with a solution of potassium hydroxide (KOH) of known concentration using phenolphthalein as a colour indicator.

According to a preferred embodiment the maleic anhydride grafted polyethylene and/or maleic anhydride grafted polypropylene have a viscosity of between 100 to 2000 mPa·s, preferably of between 150 to 1000 mPa·s and most preferably of between 200 to 500 mPa·s, at +140 °C (± 2 °C) and an acid value of between 10 to 200 mg KOH/g, preferably of between 30 to 80 mg KOH/g and most preferably of between 40 to 60 mg KOH/g. According to another preferred embodiment the maleic anhydride grafted polyethylene and/or maleic anhydride grafted polypropylene is maleic anhydride grafted polyethylene wax.

### • The hydrophobizing agent

The term "hydrophobizing agent" refers to an agent that hydrophobizes the surface of the at least one calcium carbonate-containing filler material. The term "hydrophobizing" is well known and describes the tendency of a molecule or particle to be repelled from a mass of water. In other words, hydrophobic molecules or particles tend to be nonpolar and, thus, prefer other neutral molecules and nonpolar solvents such as non-polar polymer compositions, because water molecules are polar and, therefore, hydrophobes do not dissolve well among them. The hydrophobizing agent according to the present invention is different from the maleic anhydride grafted polyethylene and/or maleic anhydride grafted polypropylene.

Hydrophobizing agents are well known to the skilled person and the skilled person knows how to select suitable hydrophobizing agents dependent on the filler material and the polymeric resin, in which the surface treated filler material is used.

According to one embodiment of the present invention the at least one hydrophobizing agent is selected from the group consisting of succinic anhydrides, carboxylic acids, phosphoric acid mono-esters, phosphoric acid di-esters, reaction products thereof and mixtures thereof.

The term "succinic anhydride", also called dihydro-2,5-furandione, succinic acid anhydride or succinyl oxide, has the molecular formula C₄H₄O₃ and is the acid anhydride of succinic acid. "Succinic anhydrides" according to the present invention are compounds that comprise succinic anhydride, for example substituted succinic anhydrides and, preferably mono-substituted succinic anhydrides.

An "carboxylic acid" in the meaning of the present invention is an organic compound that contains a carboxyl group (C(=O)OH) and has the general formula R-COOH, with R referring to the rest of the molecule, for example an aliphatic chain.

A "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

A "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

According to a preferred embodiment of the present invention the at least one hydrophobizing agent is selected from the group consisting of succinic anhydrides, carboxylic acids, reaction products thereof and mixtures thereof.

According to another preferred embodiment of the present invention, the at least one hydrophobizing agent is at least one of
mono-substituted succinic anhydride and/or reaction product(s) thereof and aliphatic linear and/or branched carboxylic acid(s) having from 8 to 24 carbon atoms and/or reaction product(s) thereof.

"At least one of' in the meaning of the present invention means that the hydrophobizing agent comprises one or more compounds selected from the group consisting of mono-substituted succinic anhydride and/or reaction product(s) thereof and aliphatic linear and/or branched carboxylic acid(s) having from 8 to 24 carbon atoms and/or reaction product(s) thereof and mixtures thereof.

According to one embodiment of the present invention the hydrophobizing agent is a mono-substituted succinic anhydride and/or reaction product(s) thereof. According to another embodiment of the present invention the hydrophobizing agent is an aliphatic linear and/or branched carboxylic acid(s) having from 8 to 24 carbon atoms and/or reaction product(s) thereof. According to another embodiment the hydrophobizing agent is a mixture of mono-substituted succinic anhydride and/or reaction product(s) thereof and aliphatic linear and/or branched carboxylic acid(s) having from 8 to 24 carbon atoms and/or reaction product(s) thereof.

### • The mono-substituted succinic anhydride

The mono-substituted succinic anhydride may comprise one or more kinds of mono-substituted succinic anhydrides and, therefore, the mono-substituted succinic anhydride may be one kind of mono-substituted succinic anhydride(s). Alternatively, the mono-substituted succinic anhydride may be a mixture of two or more kinds of mono-substituted succinic anhydrides. For example, the mono-substituted succinic anhydride may be a mixture of two or three kinds of mono-substituted succinic anhydrides, like two kinds of mono-substituted succinic anhydrides.

According to a preferred embodiment of the present invention the mono-substituted succinic anhydride is one kind of mono-substituted succinic anhydride.

The term "mono-substituted" succinic anhydride in the meaning of the present invention refers to a succinic anhydride substituted with one substituent.

The term "reaction products" of mono-substituted succinic anhydride(s) in the meaning of the present invention refers to products obtained by contacting a calcium carbonate-containing filler material with one or more mono-substituted succinic anhydride(s). Said reaction products are formed between the mono-substituted succinic acid which is formed from the applied mono-substituted succinic anhydride and reactive molecules located at the surface of the calcium carbonate-containing filler material.

It is appreciated that the mono-substituted succinic anhydride represents a surface treatment agent and consists of succinic anhydride mono-substituted with a group selected from any linear, branched, aliphatic and cyclic group having from 2 to 30 carbon atoms in the substituent.

In one embodiment of the present invention, the mono-substituted succinic anhydride and/or reaction product(s) thereof consist of succinic anhydride mono-substituted with a group selected from a linear, branched, aliphatic and cyclic group having from 3 to 25 carbon atoms in the substituent. For example, the at least one mono-substituted succinic anhydride consists of succinic anhydride mono-substituted with a group selected from a linear, branched, aliphatic and cyclic group having from 4 to 20 carbon atoms in the substituent.

In one embodiment of the present invention, the mono-substituted succinic anhydride and/or reaction product(s) thereof consists of succinic anhydride mono-substituted with one group being a linear and aliphatic group having from 2 to 30 carbon atoms in the substituent, preferably from 3 to 25 and most preferably from 4 to 20 in the substituent. Additionally or alternatively, the mono-substituted succinic anhydride and/or reaction product(s) thereof consists of succinic anhydride mono-substituted with one group being a branched and aliphatic group having from 2 to 30 carbon atoms in the substituent, preferably from 3 to 25 and most preferably from 4 to 20 in the substituent.

Thus, it is preferred that the at least one mono-substituted succinic anhydride and/or reaction product(s) thereof consists of succinic anhydride mono-substituted with one group being a linear or branched, alkyl group having from 2 to 30 carbon atoms in the substituent, preferably from 3 to 25 and most preferably from 4 to 20 in the substituent.

For example, the mono-substituted succinic anhydride and/or reaction product(s) thereof consists of succinic anhydride mono-substituted with one group being a linear alkyl group having from 2 to 30 carbon atoms in the substituent, preferably from 3 to 25 and most preferably from 4 to 20 in the substituent. Additionally or alternatively, the mono-substituted succinic anhydride and/or reaction product(s) thereof consists of succinic anhydride mono-substituted with one group being a branched alkyl group having from 2 to 30 carbon atoms in the substituent, preferably from 3 to 25 and most preferably from 4 to 20 in the substituent.

The term "alkyl" in the meaning of the present invention refers to a linear or branched, saturated organic compound composed of carbon and hydrogen. In other words, "alkyl mono-substituted succinic anhydrides" are composed of linear or branched, saturated hydrocarbon chains containing a pendant succinic anhydride group.

In one embodiment of the present invention, the mono-substituted succinic anhydride and/or reaction product(s) thereof is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Furthermore, it is appreciated that e.g. the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the alkyl mono-substituted succinic anhydride and reaction product(s) thereof is selected from the group comprising hexylsuccinic anhydride, heptylsuccinic anhydride, octylsuccinic anhydride, hexadecanyl succinic anhydride, octadecanyl succinic anhydride, and mixtures thereof and reaction product(s) thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride and reaction product(s) thereof is a mixture of two or more kinds of alkyl mono-substituted succinic anhydrides and reaction product(s) thereof. For example, the at least one mono-substituted succinic anhydride is a mixture of two or three kinds of alkyl mono-substituted succinic anhydrides.

In one embodiment of the present invention, the at least one mono-substituted succinic anhydride consists of succinic anhydride mono-substituted with one group being a linear or branched alkenyl group having from 2 to 30 carbon atoms in the substituent, preferably from 3 to 25 and most preferably from 4 to 20 in the substituent.

The term "alkenyl" in the meaning of the present invention refers to a linear or branched, unsaturated organic compound composed of carbon and hydrogen. Said organic compound further contains at least one double bond in the substituent, preferably one double bond. In other words, "alkenyl mono-substituted succinic anhydrides" are composed of linear or branched, unsaturated hydrocarbon chains containing a pendant succinic anhydride group. It is appreciated that the term "alkenyl" in the meaning of the present invention includes the cis and trans isomers.

In one embodiment of the present invention, the mono-substituted succinic anhydride and reaction product(s) thereof is at least one linear or branched alkenyl mono-substituted succinic anhydride and reaction product(s) thereof. For example, the at least one alkenyl mono-substituted succinic anhydride is selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

Accordingly, it is appreciated that e.g. the term "hexadecenyl succinic anhydride" and reaction product(s) thereof comprises linear and branched hexadecenyl succinic anhydride(s) and reaction product(s) thereof. One specific example of linear hexadecenyl succinic anhydride(s) is n-hexadecenyl succinic anhydride such as 14-hexadecenyl succinic anhydride, 13-hexadecenyl succinic anhydride, 12-hexadecenyl succinic anhydride, 11-hexadecenyl succinic anhydride, 10-hexadecenyl succinic anhydride, 9-hexadecenyl succinic anhydride, 8-hexadecenyl succinic anhydride, 7-hexadecenyl succinic anhydride, 6-hexadecenyl succinic anhydride, 5-hexadecenyl succinic anhydride, 4-hexadecenyl succinic anhydride, 3-hexadecenyl succinic anhydride and/or 2-hexadecenyl succinic anhydride. Specific examples of branched hexadecenyl succinic anhydride(s) are 14-methyl-9-pentadecenyl succinic anhydride, 14-methyl-2-pentadecenyl succinic anhydride, 1-hexyl-2-decenyl succinic anhydride and/or iso-hexadecenyl succinic anhydride.

Furthermore, it is appreciated that e.g. the term "octadecenyl succinic anhydride" and reaction product(s) thereof comprises linear and branched octadecenyl succinic anhydride(s) and reaction product(s) thereof. One specific example of linear octadecenyl succinic anhydride(s) is n-octadecenyl succinic anhydride such as 16-octadecenyl succinic anhydride, 15-octadecenyl succinic anhydride, 14-octadecenyl succinic anhydride, 13-octadecenyl succinic anhydride, 12-octadecenyl succinic anhydride, 11-octadecenyl succinic anhydride, 10-octadecenyl succinic anhydride, 9-octadecenyl succinic anhydride, 8-octadecenyl succinic anhydride, 7-octadecenyl succinic anhydride, 6-octadecenyl succinic anhydride, 5-octadecenyl succinic anhydride, 4-octadecenyl succinic anhydride, 3-octadecenyl succinic anhydride and/or 2-octadecenyl succinic anhydride. Specific examples of branched octadecenyl succinic anhydride(s) are 16-methyl-9-heptadecenyl succinic anhydride, 16-methyl-7-heptadecenyl succinic anhydride, 1-octyl-2-decenyl succinic anhydride and/or iso-octadecenyl succinic anhydride.

In one embodiment of the present invention, the alkenyl mono-substituted succinic anhydride and reaction product(s) thereof is selected from the group comprising hexenylsuccinic anhydride, octenylsuccinic anhydride, hexadecenyl succinic anhydride, octadecenyl succinic anhydride, and mixtures thereof and reaction product(s) thereof.

In one embodiment of the present invention, the mono-substituted succinic anhydride and reaction product(s) thereof is one alkenyl mono-substituted succinic anhydride and reaction product(s) thereof. For example, the one alkenyl mono-substituted succinic anhydride is hexenylsuccinic anhydride. Alternatively, the one alkenyl mono-substituted succinic anhydride is octenylsuccinic anhydride. Alternatively, the one alkenyl mono-substituted succinic anhydride is hexadecenyl succinic anhydride or octadecenyl succinic anhydride. For example, the one alkenyl mono-substituted succinic anhydride is linear hexadecenyl succinic anhydride such as n-hexadecenyl succinic anhydride or branched hexadecenyl succinic anhydride such as 1-hexyl-2-decenyl succinic anhydride. Alternatively, the one alkenyl mono-substituted succinic anhydride is octadecenyl succinic anhydride. For example, the one alkenyl mono-substituted succinic anhydride is linear octadecenyl succinic anhydride such as n-octadecenyl succinic anhydride or branched octadecenyl succinic anhydride such iso-octadecenyl succinic anhydride, or 1-octyl-2-decenyl succinic anhydride.

If the mono-substituted succinic anhydride and reaction product(s) thereof is alkenyl mono-substituted succinic anhydride, it is appreciated that the one alkenyl mono-substituted succinic anhydride is present in an amount of ≥ 92 wt.-% and preferably of ≥ 95 wt.-%, based on the total weight of the mono-substituted succinic anhydride.

In one embodiment of the present invention, the mono-substituted succinic anhydride is a mixture of two or more kinds of alkenyl mono-substituted succinic anhydrides. For example, the at least one mono-substituted succinic anhydride is a mixture of two or three kinds of alkenyl mono-substituted succinic anhydrides.

If the mono-substituted succinic anhydride and reaction product(s) thereof is a mixture of two or more kinds of alkenyl mono-substituted succinic anhydrides, one alkenyl mono-substituted succinic anhydride is linear or branched octadecenyl succinic anhydride and reaction product(s) thereof, while each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof and reaction product(s) thereof. For example, the mono-substituted succinic anhydride and reaction product(s) thereof is a mixture of two or more kinds of alkenyl mono-substituted succinic anhydrides, wherein one alkenyl mono-substituted succinic anhydride is linear octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof and reaction product(s) thereof. Alternatively, the mono-substituted succinic anhydride and reaction product(s) thereof is a mixture of two or more kinds of alkenyl mono-substituted succinic anhydrides, wherein one alkenyl mono-substituted succinic anhydride is branched octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof.

For example, the mono-substituted succinic anhydride and reaction product(s) thereof is a mixture of two or more kinds of alkenyl mono-substituted succinic anhydrides and reaction product(s) thereof comprising one or more hexadecenyl succinic anhydride, like linear or branched hexadecenyl succinic anhydride(s), and one or more octadecenyl succinic anhydride, like linear or branched octadecenyl succinic anhydride(s).

In one embodiment of the present invention, the mono-substituted succinic anhydride and reaction product(s) thereof is a mixture of two or more kinds of alkenyl mono-substituted succinic anhydrides and reaction product(s) thereof comprising linear hexadecenyl succinic anhydride(s) and linear octadecenyl succinic anhydride(s). Alternatively, the mono-substituted succinic anhydride and reaction product(s) thereof is a mixture of two or more kinds of alkenyl mono-substituted succinic anhydrides and reaction product(s) thereof comprising branched hexadecenyl succinic anhydride(s) and branched octadecenyl succinic anhydride(s). For example, the one or more hexadecenyl succinic anhydride is linear hexadecenyl succinic anhydride like n-hexadecenyl succinic anhydride and/or branched hexadecenyl succinic anhydride like 1-hexyl-2-decenyl succinic anhydride. Additionally or alternatively, the one or more octadecenyl succinic anhydride is linear octadecenyl succinic anhydride like n-octadecenyl succinic anhydride and/or branched octadecenyl succinic anhydride like iso-octadecenyl succinic anhydride and/or 1-octyl-2-decenyl succinic anhydride.

If the mono-substituted succinic anhydride and reaction product(s) thereof is a mixture of two or more kinds of alkenyl mono-substituted succinic anhydrides, it is appreciated that one alkenyl mono-substituted succinic anhydride is present in an amount of from 10 to 90 wt.-% and preferably of from 20 to 85 wt.-%, based on the total weight of the mono-substituted succinic anhydride and reaction product(s) thereof.

For example, if the mono-substituted succinic anhydride and reaction product(s) thereof is a mixture of two or more kinds of alkenyl mono-substituted succinic anhydrides and reaction product(s) thereof comprising one or more hexadecenyl succinic anhydride(s), like linear or branched hexadecenyl succinic anhydride(s), and one or more octadecenyl succinic anhydride(s), like linear or branched hexadecenyl succinic anhydride(s), it is preferred that the octadecenyl succinic anhydride(s) and reaction product(s) thereof are present in an amount of from 10 to 90 wt.-% and preferably of from 20 to 85 wt.-%, based on the total weight of the mono-substituted succinic anhydride and reaction product(s) thereof.

It is also appreciated that the mono-substituted succinic anhydride and reaction product(s) thereof may be a mixture of alkyl mono-substituted succinic anhydrides and reaction product(s) thereof and alkenyl mono-substituted succinic anhydrides and reaction product(s) thereof.

If the mono-substituted succinic anhydride and reaction product(s) thereof is a mixture of alkyl mono-substituted succinic anhydrides and reaction product(s) thereof and alkenyl mono-substituted succinic anhydrides and reaction product(s) thereof, it is appreciated that the alkyl substituent of the alkyl mono-substituted succinic anhydrides and the alkenyl substituent of the alkenyl mono-substituted succinic anhydrides are preferably the same. For example, the mono-substituted succinic anhydride is a mixture of ethylsuccinic anhydride and ethenylsuccinic anhydride. Alternatively, the mono-substituted succinic anhydride is a mixture of propylsuccinic anhydride and propenylsuccinic anhydride. Alternatively, mono-substituted succinic anhydride is a mixture of butylsuccinic anhydride and butenylsuccinic anhydride. Alternatively, the mono-substituted succinic anhydride is a mixture of triisobutyl succinic anhydride and triisobutenyl succinic anhydride. Alternatively, the mono-substituted succinic anhydride is a mixture of pentylsuccinic anhydride and pentenylsuccinic anhydride. Alternatively, the mono-substituted succinic anhydride is a mixture of hexylsuccinic anhydride and hexenylsuccinic anhydride. Alternatively, the mono-substituted succinic anhydride is a mixture of heptylsuccinic anhydride and heptenylsuccinic anhydride. Alternatively, the mono-substituted succinic anhydride is a mixture of octylsuccinic anhydride and octenylsuccinic anhydride. Alternatively, the mono-substituted succinic anhydride is a mixture of nonylsuccinic anhydride and nonenylsuccinic anhydride. Alternatively, the mono-substituted succinic anhydride is a mixture of decyl succinic anhydride and decenyl succinic anhydride. Alternatively, the mono-substituted succinic anhydride is a mixture of dodecyl succinic anhydride and dodecenyl succinic anhydride. Alternatively, the mono-substituted succinic anhydride is a mixture of hexadecanyl succinic anhydride and hexadecenyl succinic anhydride. For example, the mono-substituted succinic anhydride is a mixture of linear hexadecanyl succinic anhydride and linear hexadecenyl succinic anhydride or a mixture of branched hexadecanyl succinic anhydride and branched hexadecenyl succinic anhydride. Alternatively, the mono-substituted succinic anhydride is a mixture of octadecanyl succinic anhydride and octadecenyl succinic anhydride. For example, the mono-substituted succinic anhydride is a mixture of linear octadecanyl succinic anhydride and linear octadecenyl succinic anhydride or a mixture of branched octadecanyl succinic anhydride and branched octadecenyl succinic anhydride.

If the mono-substituted succinic anhydride and reaction product(s) thereof is a mixture of alkyl mono-substituted succinic anhydrides and alkenyl mono-substituted succinic anhydrides and reaction product(s) thereof, the weight ratio between the alkyl mono-substituted succinic anhydride and the alkenyl mono-substituted succinic anhydride is between 90:10 and 10:90 (wt.-%/wt.-%). For example, the weight ratio between the alkyl mono-substituted succinic anhydride and the alkenyl mono-substituted succinic anhydride is between 70:30 and 30:70 (wt.-%/wt.-%) or between 60:40 and 40:60.

Optionally, the mono-substituted succinic anhydride and reaction product(s) thereof are present in combination with mono-substituted succinic acid and reaction product(s) thereof. The mono-substituted succinic acid may be one kind of mono-substituted succinic acid or a mixture of two or more kinds of mono-substituted succinic acid.

It is appreciated that the mono-substituted succinic acid represents a surface treatment agent and consists of succinic acid mono-substituted with a group selected from any linear, branched, aliphatic and cyclic group having from 2 to 30 carbon atoms, preferably from 3 to 25 and most preferably from 4 to 20 in the substituent.

If the mono-substituted succinic anhydride and reaction product(s) thereof is present in combination with mono-substituted succinic acid and reaction product(s) thereof, it is appreciated that the mono-substituted succinic anhydride and the mono-substituted succinic acid may comprise the same or different substituent.

In one embodiment of the present invention, the succinic acid molecule of the mono-substituted succinic acid and reaction product(s) thereof and the succinic anhydride molecule of the mono-substituted succinic anhydride and reaction product(s) thereof are mono-substituted with the same group selected from any linear, branched, aliphatic and cyclic group having from 2 to 30 carbon atoms, preferably from 3 to 25 and most preferably from 4 to 20 in the substituent.

If the mono-substituted succinic anhydride and reaction product(s) thereof is present in combination with mono-substituted succinic acid, the mono-substituted succinic acid and reaction product(s) thereof are present in an amount of ≤ 10 mol.-%, based on the molar sum of the mono-substituted succinic anhydride and the at least one mono-substituted succinic acid and reaction product(s) thereof. For example, the mono-substituted succinic acid and reaction product(s) thereof is present in an amount of ≤ 5 mol.-%, preferably of ≤ 2.5 mol.-% and most preferably of ≤ 1 mol.-%, based on the molar sum of the mono-substituted succinic anhydride and the mono-substituted succinic acid and reaction product(s) thereof.

### • The aliphatic linear and/or branched carboxylic acid(s) having from 8 to 24 carbon atoms

The aliphatic linear and/or branched carboxylic acid(s) having from 8 to 24 carbon atoms and reaction product(s) thereof may comprise one or more aliphatic linear and/or branched carboxylic acid(s) having from 8 to 24 carbon atoms and reaction product(s) thereof. According to one embodiment of the present invention, the aliphatic linear and/or branched carboxylic acid(s) having from 8 to 24 carbon atoms and reaction product(s) thereof comprises only one aliphatic linear and/or branched carboxylic acid having from 8 to 24 carbon atoms and reaction product(s) thereof. According to another embodiment of the present invention the aliphatic linear and/or branched carboxylic acids having from 8 to 24 carbon atoms and reaction product(s) thereof comprise two or more, for example three or four different aliphatic linear and/or branched carboxylic acids having from 8 to 24 carbon atoms and reaction product(s) thereof.

The term "aliphatic linear and/or branched carboxylic acid(s)" in the meaning of the present invention refers to a compound that contains a carboxyl group (C(=O)OH) and has the general formula R-COOH, with R referring to an linear and/or branched hydrocarbon chain.

The term "reaction products" of aliphatic linear and/or branched carboxylic acids in the meaning of the present invention refers to products obtained by contacting a calcium carbonate-containing filler material with a mixture of aliphatic linear and/or branched carboxylic acids. Said reaction products are formed between the mixture of aliphatic linear and/or branched carboxylic acids and reactive molecules located at the surface of the calcium carbonate-containing filler material.

The aliphatic linear and/or branched carboxylic acid(s) and/or reaction products thereof of the present invention have from 8 to 24 carbon atoms, preferably from 8 to 22, preferably from 10 to 22, more preferably from 12 to 20 and most preferably from 14 to 20 carbon atoms.

Aliphatic linear and/or branched carboxylic acid(s) having from 8 to 24 carbon atoms are known to the skilled person and are industrially available. For example, the linear and/or branched carboxylic acid(s) having from 8 to 24 carbon atoms is selected from octanoic acid, nonanoic acid, decanoic acid, undecanoic acid, lauric acid, tridecanoic acid, myristic acid, pentadecanoic acid, palmitic acid, heptadecanoic acid, nonadecanoic acid, arachidic acid, heneicosanoic acid, behenic acid, tricosanoic acid, lignoceric acid, stearic acid and mixtures thereof.

According to one embodiment of the present invention the linear and/or branched carboxylic acid having from 8 to 24 carbon atoms and reaction product(s) thereof comprises only one linear and/or branched carboxylic acid having from 8 to 24 carbon atoms and reaction product(s) thereof. According to one embodiment of the present invention the linear and/or branched carboxylic acid having from 8 to 24 carbon atoms and reaction product(s) thereof is a branched carboxylic acid having from 8 to 24 carbon atoms and reaction product(s) thereof. According to another embodiment of the present invention the linear and/or branched carboxylic acid having from 8 to 24 carbon atoms and reaction product(s) thereof is a linear carboxylic acid having from 8 to 24 carbon atoms and reaction product(s) thereof, preferably selected from the group consisting of octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosanoic acid, behenic acid, tricosanoic acid, lignoceric acid, and mixtures thereof and most preferably is selected from the group consisting of stearic acid and palmitic acid.

According to another embodiment of the present invention the linear and/or branched carboxylic acid(s) having from 8 to 24 carbon atoms and reaction product(s) thereof comprises two or more, for example three or four or five, linear and/or branched carboxylic acid having from 8 to 24 carbon atoms and reaction product(s) thereof. According to a preferred embodiment of the present invention the linear and/or branched carboxylic acid(s) having from 8 to 24 carbon atoms and reaction product(s) thereof comprises two linear and/or branched carboxylic acid having from 8 to 24 carbon atoms and reaction product(s) thereof. For example, one carboxylic acid may be a linear carboxylic acid and the other carboxylic acid may be a branched carboxylic acid. Alternatively, the two carboxylic acids may be both linear carboxylic acids or both branched carboxylic acids.

According to a preferred embodiment of the present invention the linear and/or branched carboxylic acid(s) having from 8 to 24 carbon atoms and reaction product(s) thereof comprises two linear carboxylic acid(s) having from 8 to 24 carbon atoms and reaction product(s) thereof and preferably are selected from the group consisting of octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosanoic acid, behenic acid, tricosanoic acid, lignoceric acid, and mixtures thereof and most preferably are a mixture of palmitic acid and stearic acid.

If the linear and/or branched carboxylic acid(s) having from 8 to 24 carbon atoms and reaction product(s) thereof is a mixture of two different linear and/or branched carboxylic acid(s) having from 8 to 24 carbon atoms and reaction product(s) thereof the weight ratio of the first linear and/or branched carboxylic acid having from 8 to 24 carbon atoms and reaction product(s) thereof to the second linear and/or branched carboxylic acid having from 8 to 24 carbon atoms and reaction product(s) thereof is from 10:1 to 1:10, preferably from 5:1 to 1:5, more preferably from 4:1 to 1:4 and most preferably from 1:1.

According to a preferred embodiment of the present invention the linear and/or branched carboxylic acid(s) having from 8 to 24 carbon atoms and reaction product(s) thereof is a 1:1 mixture of stearic acid and palmitic acid.

The surface treated filler material product comprises the treatment layer comprising i) maleic anhydride grafted polyethylene and/or maleic anhydride grafted polypropylene and ii) at least one hydrophobizing agent in an amount of from 0.2 to 7 wt.-%, based on the total dry weight of the at least one calcium carbonate-containing filler material. Preferably, the surface treated filler material product comprises the treatment layer comprising i) maleic anhydride grafted polyethylene and/or maleic anhydride grafted polypropylene and ii) at least one hydrophobizing agent in an amount of from 0.4 to 5 wt.-%, based on the total dry weight of the at least one calcium carbonate-containing filler material, more preferably from 0.6 to 4 wt.-% and most preferably from 0.8 to 3 wt.-%, based on the total dry weight of the at least one calcium carbonate-containing filler material.

According to another embodiment of the present invention, the treatment layer can be further characterized in that the total weight of the treatment layer on the surface of the surface treated filler material is from 0.2 to 10 mg/m², more preferably from 0.4 to 8 mg/m² and most preferably from 2 to 8 mg/m² of the at least one calcium carbonate-comprising filler material.

According to another embodiment of the present invention, the treatment layer can be further characterized in that the total weight of the treatment layer on the surface of the surface treated filler material is from 0.1 to 4 wt.-%/m², more preferably from 0.2 to 2 wt.-%/m² and most preferably from 0.3 to 0.5 wt.-%/m² of the at least one calcium carbonate-comprising filler material.

As already set out the surface treated filler material product comprises the treatment layer comprising i) maleic anhydride grafted polyethylene and/or maleic anhydride grafted polypropylene and ii) at least one hydrophobizing agent on the surface of the at least one calcium carbonate-containing filler material. According to one embodiment of the present invention the treatment layer comprises the maleic anhydride grafted polyethylene and/or maleic anhydride grafted polypropylene of step i) and the at least one hydrophobizing agent of step ii) in an weight ratio of from 10:1 to 1:10, preferably from 5:1 to 1:5 and most preferably from 4:1 to 1:4, for example in an amount of 1:1.

According to another embodiment of the present invention, the treatment layer can be further characterized in that the total weight of the maleic anhydride grafted polyethylene and/or maleic anhydride grafted polypropylene of step i) on the surface of the surface treated filler material is from 0.1 to 4 wt.-%, preferably from 0.2 to 3 wt.-% and most preferably from 0.5 to 2 wt.-%, based on the total dry weight of the at least one calcium carbonate-containing filler material.

According to another embodiment of the present invention, the treatment layer can be further characterized in that the total weight of the at least one hydrophobizing agent of step ii) on the surface of the surface treated filler material is from 0.1 to 3 wt.-%, preferably from 0.2 to 2 wt.-% and most preferably from 0.3 to 1 wt.-%, based on the total dry weight of the at least one calcium carbonate-containing filler material.

According to one embodiment of the present invention, the treatment layer can be further characterized in that the total weight of the maleic anhydride grafted polyethylene and/or maleic anhydride grafted polypropylene of step i) on the surface of the surface treated filler material is from 0.1 to 4 wt.-%, preferably from 0.2 to 3 wt.-% and most preferably from 0.5 to 2 wt.-%, based on the total dry weight of the at least one calcium carbonate-containing filler material and the total weight of the at least one hydrophobizing agent of step ii) on the surface of the surface treated filler material is from 0.1 to 3 wt.-%, preferably from 0.2 to 2 wt.-% and most preferably from 0.3 to 1 wt.-%, based on the total dry weight of the at least one calcium carbonate-containing filler material.

According to one embodiment, other surface treatment agents than maleic anhydride grafted polyethylene, maleic anhydride grafted polypropylene and at least one hydrophobizing agent are present on the surface of the at least one calcium carbonate-containing filler material. These other surface treatment agents may be present in an amount below 50 wt.-%, based on the total weight of the treatment layer on the surface of the at least one calcium carbonate-containing filler material, preferably, below 40 wt.-%, more preferably below 20 wt.-% and most preferably below 10 wt.-%.

According to a preferred embodiment the surface treatment layer consists only of i) maleic anhydride grafted polyethylene and/or maleic anhydride grafted polypropylene and ii) at least one hydrophobizing agent.

According to a preferred embodiment of the present invention the surface treatment layer comprises i) maleic anhydride grafted polyethylene and/or maleic anhydride grafted polypropylene and ii) at least one hydrophobizing agent, wherein the at least on hydrophobizing agent is at least one of
mono-substituted succinic anhydride and/or reaction product(s) thereof and aliphatic linear and/or branched carboxylic acid(s) having from 8 to 24 carbon atoms and/or reaction product(s) thereof.

For example, the surface treatment layer comprises i) maleic anhydride grafted polyethylene and/or maleic anhydride grafted polypropylene and ii) at least one hydrophobizing agent, wherein the at least on hydrophobizing agent is mono-substituted succinic anhydride and/or reaction product(s) thereof. According to one embodiment of the present invention, the treatment layer comprises the maleic anhydride grafted polyethylene and/or maleic anhydride grafted polypropylene of step i) on the surface of the surface treated filler material in an amount from 0.1 to 4 wt.-%, preferably from 0.2 to 3 wt.-% and most preferably from 0.5 to 2 wt.-%, based on the total dry weight of the at least one calcium carbonate-containing filler material and the mono-substituted succinic anhydride and/or reaction product(s) thereof of step ii) in an amount from 0.1 to 3 wt.-%, preferably from 0.2 to 2 wt.-% and most preferably from 0.3 to 1 wt.-%, based on the total dry weight of the at least one calcium carbonate-containing filler material.

Additionally or alternatively, the treatment layer comprises the maleic anhydride grafted polyethylene and/or maleic anhydride grafted polypropylene of step i) and the mono-substituted succinic anhydride and/or reaction product(s) thereof of step ii) in an weight ratio of from 10:1 to 1:10, preferably from 5:1 to 1:5 and most preferably from 4:1 to 1:4, for example in an amount of 1:1.

Additionally or alternatively, the molar ratio of the at least one mono-substituted succinic anhydride to the salty reaction product(s) thereof in the treatment layer on the surface of the at least one calcium carbonate-containing filler material is from 99.9:0.1 to 0.1:99.9, preferably from 70:30 to 90:10. The wording "molar ratio of the at least one mono-substituted succinic anhydride to the salty reaction product(s) thereof' in the meaning of the present invention refers to the sum of the molecular weight of the at least one mono-substituted succinic anhydride to the sum of the molecular weight of the mono-substituted succinic anhydride molecules in the salty reaction products thereof.

Alternatively, the surface treatment layer comprises i) maleic anhydride grafted polyethylene and/or maleic anhydride grafted polypropylene and ii) at least one hydrophobizing agent, wherein the at least on hydrophobizing agent is aliphatic linear and/or branched carboxylic acid(s) having from 8 to 24 carbon atoms and/or reaction product(s) thereof. According to one embodiment of the present invention, the treatment layer comprises the maleic anhydride grafted polyethylene and/or maleic anhydride grafted polypropylene of step i) on the surface of the surface treated filler material in an amount from 0.1 to 4 wt.-%, preferably from 0.2 to 3 wt.-% and most preferably from 0.5 to 2 wt.-%, based on the total dry weight of the at least one calcium carbonate-containing filler material and the aliphatic linear and/or branched carboxylic acid(s) having from 8 to 24 carbon atoms and/or reaction product(s) thereof of step ii) in an amount from 0.1 to 3 wt.-%, preferably from 0.2 to 2 wt.-% and most preferably from 0.3 to 1 wt.-%, based on the total dry weight of the at least one calcium carbonate-containing filler material.

Additionally or alternatively, the treatment layer comprises the maleic anhydride grafted polyethylene and/or maleic anhydride grafted polypropylene of step i) and the aliphatic linear and/or branched carboxylic acid(s) having from 8 to 24 carbon atoms and/or reaction product(s) thereof of step ii) in an weight ratio of from 10:1 to 1:10, preferably from 5:1 to 1:5 and most preferably from 4:1 to 1:4, for example in an amount of 1:1.

Additionally or alternatively, the molar ratio of the at least one aliphatic linear and/or branched carboxylic acid(s) to the salty reaction product(s) thereof in the treatment layer on the surface of the at least one calcium carbonate-containing filler material is from 99.9:0.1 to 0.1:99.9, preferably from 70:30 to 90:10. The wording "molar ratio of the at least one aliphatic linear and/or branched carboxylic acid(s) to the salty reaction product(s) thereof' in the meaning of the present invention refers to the sum of the molecular weight of the at least one aliphatic linear and/or branched carboxylic acid(s) to the sum of the molecular weight of the aliphatic linear and/or branched carboxylic acid(s) molecules in the salty reaction products thereof.

According to another embodiment of the present invention, the surface treatment layer comprises i) maleic anhydride grafted polyethylene and/or maleic anhydride grafted polypropylene and ii) at least one hydrophobizing agent, wherein the at least on hydrophobizing agent is a mixture of mono-substituted succinic anhydride and/or reaction product(s) thereof and aliphatic linear and/or branched carboxylic acid(s) having from 8 to 24 carbon atoms and/or reaction product(s) thereof.

For example, the treatment layer comprises the maleic anhydride grafted polyethylene and/or maleic anhydride grafted polypropylene of step i) on the surface of the surface treated filler material in an amount from 0.1 to 4 wt.-%, preferably from 0.2 to 3 wt.-% and most preferably from 0.5 to 2 wt.-%, based on the total dry weight of the at least one calcium carbonate-containing filler material and the mixture of the mono-substituted succinic anhydride and/or reaction product(s) thereof and the aliphatic linear and/or branched carboxylic acid(s) having from 8 to 24 carbon atoms and/or reaction product(s) thereof of step ii) in an amount from 0.1 to 3 wt.-%, preferably from 0.2 to 2 wt.-% and most preferably from 0.3 to 1 wt.-%, based on the total dry weight of the at least one calcium carbonate-containing filler material.

Additionally or alternatively, the treatment layer comprises the maleic anhydride grafted polyethylene and/or maleic anhydride grafted polypropylene of step i) and the mixture of the mono-substituted succinic anhydride and/or reaction product(s) thereof and of the aliphatic linear and/or branched carboxylic acid(s) having from 8 to 24 carbon atoms and/or reaction product(s) thereof of step ii) in an weight ratio of from 10:1 to 1:10, preferably from 5:1 to 1:5 and most preferably from 4:1 to 1:4, for example in an amount of 1:1.

The surface treated filler material product of the present invention may be in the form of a slurry or powder and preferably is in form of a powder.

The inventors surprisingly found out that the foregoing surface treated filler material products have good powder flowability but also a low moisture pick-up susceptibility.

In particular, the inventive surface treated filler material product has, when measuring powder flowability on a FT4 powder Rheometer (ASTM D7891-15) a basic flowability energy (BFE) and a conditioned bulk density (CBD) which is comparable to the basic flowability energy (BFE) and the conditioned bulk density (CBD) of a surface treated filler material that has been surface treated merely with the same hydrophobizing agent but without the maleic anhydride grafted polyethylene and/or maleic anhydride grafted polypropylene

Additionally or alternatively, the inventive surface treated filler material product has a moisture pick-up susceptibility which is preferably below 1.0 mg/g and which is comparable to the moisture pick-up susceptibility of a surface treated filler material that has been surface treated merely with the same hydrophobizing agent but without the maleic anhydride grafted polyethylene and/or maleic anhydride grafted polypropylene.

### Process for preparing surface treated filler material

Furthermore, a process is provided for preparing a surface treated filler material product, the process comprising at least the steps of:
a) providing at least one calcium carbonate-containing filler material,
b) providing
   i. maleic anhydride grafted polyethylene and/or maleic anhydride grafted polypropylene and
   ii. at least one hydrophobizing agent and
c) forming a treatment layer on the surface of the at least one calcium carbonate-containing filler material by contacting the surface of the at least one calcium carbonate-containing filler material of step a), under mixing, in one or more steps, in any order, with 0.2 to 7 wt.-% of maleic anhydride grafted polyethylene and/or maleic anhydride grafted polypropylene of step i) and at least one hydrophobizing agent of step ii), based on the total dry weight of the at least one calcium carbonate-containing filler material, wherein the treatment layer comprises maleic anhydride grafted polyethylene and/or maleic anhydride grafted polypropylene of step i) and at least hydrophobizing agent of step ii).

According to step a) at least one calcium carbonate-containing filler material is provided. The calcium carbonate-containing filler material has already been described above.

According to step b) maleic anhydride grafted polyethylene and/or maleic anhydride grafted polypropylene and at least one hydrophobizing agent are provided. The maleic anhydride grafted polyethylene and/or maleic anhydride grafted polypropylene and the at least one hydrophobizing agent have already been described above.

### Characterization of step c) Forming a treatment layer on the surface of the at least one calcium carbonate-containing filler material

According to step c) a treatment layer is formed on the surface of the at least one calcium carbonate-containing filler material by contacting the surface of the at least one calcium carbonate-containing filler material of step a), under mixing, in one or more steps, in any order, with 0.2 to 7 wt.-% of maleic anhydride grafted polyethylene and/or maleic anhydride grafted polypropylene of step i) and at least one hydrophobizing agent of step ii), based on the total dry weight of the at least one calcium carbonate-containing filler material, wherein the treatment layer comprises maleic anhydride grafted polyethylene and/or maleic anhydride grafted polypropylene of step i) and at least hydrophobizing agent of step ii).

Contacting the at least one calcium carbonate-containing filler material with maleic anhydride grafted polyethylene and/or maleic anhydride grafted polypropylene of step i) and at least one hydrophobizing agent of step ii) takes place under mixing conditions. The skilled man will adapt these mixing conditions (such as the configuration of mixing pallets and mixing speed) according to his process equipment.

According to one embodiment of the present invention contacting step c) is carried out in that the maleic anhydride grafted polyethylene and/or maleic anhydride grafted polypropylene of step i) and at least one hydrophobizing agent of step ii) are added simultaneously or successively and preferably are added simultaneously, with the provision that if the compounds are added successively, the addiction of the first compound does not lead to a complete coverage of the surface of the at least one calcium carbonate-containing filler material.

In one preferred embodiment of the present invention, the inventive process may be a continuous process. In this case, it is possible to contact the at least one calcium carbonate-containing filler material with the maleic anhydride grafted polyethylene and/or maleic anhydride grafted polypropylene of step i) and the at least one hydrophobizing agent of step ii) in a constant flow, so that a constant concentration of the maleic anhydride grafted polyethylene and/or maleic anhydride grafted polypropylene of step i) and at least one hydrophobizing agent of step ii) is provided during step c).

Alternatively, the at least one calcium carbonate-containing filler material is contacted with the maleic anhydride grafted polyethylene and/or maleic anhydride grafted polypropylene of step i) and the at least one hydrophobizing agent of step ii) in one step, wherein said maleic anhydride grafted polyethylene and/or maleic anhydride grafted polypropylene of step i) and the at least one hydrophobizing agent of step ii) are preferably added in one portion.

In another embodiment of the present invention, the inventive process may be a batch process, i.e. the at least one calcium carbonate-containing filler material is contacted with the maleic anhydride grafted polyethylene and/or maleic anhydride grafted polypropylene of step i) and the at least one hydrophobizing agent of step ii) in more than one step, wherein said maleic anhydride grafted polyethylene and/or maleic anhydride grafted polypropylene of step i) and at least one hydrophobizing agent of step ii) are preferably added in about equal portions. Alternatively, it is also possible to add the maleic anhydride grafted polyethylene and/or maleic anhydride grafted polypropylene of step i) and the at least one hydrophobizing agent of step ii) in unequal portions to the at least one calcium carbonate-containing filler material, i.e. in larger and smaller portions.

According to one embodiment of the present invention, contacting in step c) is carried out in a batch or continuous process for a period of time from 0.1 to 1000 s. For example, contacting in step c) is a continuous process and comprises one or several contacting steps and the total contacting time is from 0.1 to 20 s, preferably from 0.5 to 15 s and most preferably from 1 to 10 s.

It is appreciated that contacting in step c) can be carried out in any order. For example, contacting in step c) is carried out in that the maleic anhydride grafted polyethylene and/or maleic anhydride grafted polypropylene of step i) and at least one hydrophobizing agent of step ii) are added simultaneously to the at least one calcium carbonate-containing filler material. In this embodiment, the maleic anhydride grafted polyethylene and/or maleic anhydride grafted polypropylene of step i) and the at least one hydrophobizing agent of step ii) are preferably added as a blend to the at least one calcium carbonate-containing filler material.

Alternatively, the maleic anhydride grafted polyethylene and/or maleic anhydride grafted polypropylene of step i) is added before or after the at least one hydrophobizing agent of step ii). According to a preferred embodiment of the present invention the maleic anhydride grafted polyethylene and/or maleic anhydride grafted polypropylene of step i) is added before the at least one hydrophobizing agent of step ii). When adding the maleic anhydride grafted polyethylene and/or maleic anhydride grafted polypropylene of step i) and the at least one hydrophobizing agent of step ii) successively, the addition of the first compound does not lead to a complete coverage of the surface of the at least one calcium carbonate-containing filler material.

For example, if the maleic anhydride grafted polyethylene and/or maleic anhydride grafted polypropylene of step i) is added after the at least one hydrophobizing agent of step ii), the addition of the at least one hydrophobizing agent of step ii) does not lead to a complete coverage of the surface of the at least one calcium carbonate-containing filler material. For example, only 10 to 90 % of the surface of the calcium carbonate-containing filler material are coated with the at least one hydrophobizing agent of step ii), preferably between 20 to 80% and most preferably between 30 to 70%. The theoretical value of the coated surface can be calculated based on the amount of the at least one hydrophobizing agent and the specific surface area (BET) value of the calcium carbonate containing filler material. In a second step the maleic anhydride grafted polyethylene and/or maleic anhydride grafted polypropylene of step i) is added in order to cover the remaining surface that is not covered by the at least one hydrophobizing agent of step ii). The inventors have found that if the addition of the first compound, for example the at least one hydrophobizing agent of step ii) already leads to a full surface coverage of the calcium carbonate-containing filler material an additional treatment of the calcium carbonate-containing material with the second compound, for example the maleic anhydride grafted polyethylene and/or maleic anhydride grafted polypropylene of step i) will be less efficient.

It is appreciated that the maleic anhydride grafted polyethylene and/or maleic anhydride grafted polypropylene of step i) and the at least one hydrophobizing agent of step ii) should feature a workable viscosity, i.e. the maleic anhydride grafted polyethylene and/or maleic anhydride grafted polypropylene of step i) and the at least one hydrophobizing agent of step ii) should be in a molten or in a liquid state during contacting.

Thus, it is required that the temperature before and/or during contacting step c) is adjusted such that the maleic anhydride grafted polyethylene and/or maleic anhydride grafted polypropylene of step i) and the at least one hydrophobizing agent of step ii) are in a molten or liquid state.

For example, the maleic anhydride grafted polyethylene and/or maleic anhydride grafted polypropylene of step i) and/or the at least one hydrophobizing agent of step ii) are in powder form and are heated before or during contacting step c) such that they are in a molten or liquid state.

In general, contacting step c) is carried out at a treatment temperature of from 20 to 250 °C, preferably of from 60 to 180 °C and most preferably of from 80 to 150 °C.

Preferably, if the at least one hydrophobizing agent is provided in a liquid state, i.e. under standard ambient temperature and pressure (SATP) which refers to a temperature of 298.15 K (25°C) and an absolute pressure of exactly 100 000 Pa (1 bar, 14.5 psi, 0.98692 atm), it is appreciated that contacting step c) can be carried out at room temperature, or a temperature above room temperature, i.e. from 20 to 250 °C, preferably of from 20 to 180 °C and most preferably of from 20 to 150 °C. If the maleic anhydride grafted polyethylene and/or maleic anhydride grafted polypropylene of step i) and/or the at least one hydrophobizing agent of step ii) is/are provided in a molten state, it is appreciated that the temperature before and/or during contacting step c) is adjusted such that the temperature is at least 2°C above the melting point of the maleic anhydride grafted polyethylene and/or maleic anhydride grafted polypropylene of step i) and/or the at least one hydrophobizing agent of step ii). For example, the temperature before contacting step c) is adjusted such that the temperature is at least 2°C above the melting point of the maleic anhydride grafted polyethylene and/or maleic anhydride grafted polypropylene of step i). Alternatively, the temperature before and during contacting step c) is adjusted such that the temperature is at least 2°C above the melting point of the at least one hydrophobizing agent.

It is appreciated that the wording "melting point" refers to the solid liquid phase transition of the respective compound. In case the compound is a polymer, the wording "melting point" refers to the transition temperature of the crystalline to a solid amorphous phase.

In one embodiment of the present invention, the temperature before and/or during contacting step c) is adjusted such that the temperature is at least 5°C, preferably, at least 8 °C and most preferably at least 10 °C above the melting point of the maleic anhydride grafted polyethylene and/or maleic anhydride grafted polypropylene of step i) and/or the at least one hydrophobizing agent of step ii).

The treatment time for carrying out the contacting of the maleic anhydride grafted polyethylene and/or maleic anhydride grafted polypropylene of step i) and/or the at least one hydrophobizing agent of step ii) is carried out for a period of 1 000 s or less, preferably for a period of 500 s or less, more preferably for a period of 250 s or less and most preferably from 0.1 to 1 000 s. For example, contacting step c) is carried out for a period of time from 0.1 to 20 s, preferably from 0.5 to 15 s and most preferably from 1 to 10 s. In general, the length of contacting the at least one calcium carbonate-containing filler material with the maleic anhydride grafted polyethylene and/or maleic anhydride grafted polypropylene of step i) and/or the at least one hydrophobizing agent of step ii) is determined by the treatment temperature applied during said contacting. For example, where a treatment temperature of about 250 °C is applied, the treatment time is as short as, for example, about 0.1 s. If a treatment temperature of about 90 °C is applied, the treatment time can be as long as, for example, about 1 000 s.

It is appreciated that the maleic anhydride grafted polyethylene and/or maleic anhydride grafted polypropylene of step i) and/or the at least one hydrophobizing agent of step ii) are added in contacting step c) in a total amount of from 0.2 to 7 wt.-%, based on the total dry weight of the at least one calcium carbonate-containing filler material of step a). For example, the maleic anhydride grafted polyethylene and/or maleic anhydride grafted polypropylene of step i) and/or the at least one hydrophobizing agent of step ii) are added in contacting step c) in an amount of from 0.3 to 4.0 wt.-% or of from 0.6 to 3.0 wt.-%, based on the total dry weight of the at least one calcium carbonate-containing filler material of step a).

According to another embodiment of the present invention, the maleic anhydride grafted polyethylene and/or maleic anhydride grafted polypropylene of step i) is added in contacting step c) in a total amount of from 0.1 to 4 wt.-%, preferably from 0.2 to 3 wt.-% and most preferably from 0.5 to 2 wt.-%, based on the total dry weight of the at least one calcium carbonate-containing filler material.

Additionally or alternatively, the at least one hydrophobizing agent of step ii) is added in contacting step c) in a total amount from 0.1 to 3 wt.-%, preferably from 0.2 to 2 wt.-% and most preferably from 0.3 to 1 wt.-%, based on the total dry weight of the at least one calcium carbonate-containing filler material.

According to one embodiment of the present invention, the maleic anhydride grafted polyethylene and/or maleic anhydride grafted polypropylene of step i) is added in contacting step c) in a total amount of from 0.1 to 4 wt.-%, preferably from 0.2 to 3 wt.-% and most preferably from 0.5 to 2 wt.-%, based on the total dry weight of the at least one calcium carbonate-containing filler material and the at least one hydrophobizing agent of step ii) is added in contacting step c) in a total amount from 0.1 to 3 wt.-%, preferably from 0.2 to 2 wt.-% and most preferably from 0.3 to 1 wt.-%, based on the total dry weight of the at least one calcium carbonate-containing filler material.

The ratio of the maleic anhydride grafted polyethylene and/or maleic anhydride grafted polypropylene of step i) and the at least one hydrophobizing agent of step ii) can be varied in a great range. However, it is preferred that contacting step c) is carried out in that the maleic anhydride grafted polyethylene and/or maleic anhydride grafted polypropylene of step i) and the at least one hydrophobizing agent of step ii) are added in a weight ratio of from 10:1 to 1:10. Preferably, contacting step c) is carried out in that the maleic anhydride grafted polyethylene and/or maleic anhydride grafted polypropylene of step i) and the at least one hydrophobizing agent of step ii) are added in a weight ratio of from 5:1 to 1:5 and most preferably from 4:1 to 1:4, such as in an amount of 1:1.

In one embodiment of the present invention, the at least one calcium carbonate-containing filler material is preheated, i.e. activated, before contacting step c) is carried out. That is to say, the at least one calcium carbonate-containing filler material is treated at a temperature of from 20 to 250 °C, preferably of from 40 to 200 °C, more preferably of from 50 to 150 °C and most preferably of from 60 to 140 °C before contacting step c) is carried out.

The treatment time for carrying out the preheating of the at least one calcium carbonate-containing filler material is carried out for a period of 30 min or less, preferably for a period of 20 min or less and more preferably for a period of 15 min or less.

In one embodiment of the present invention, the preheating of the at least one calcium carbonate-containing filler material is carried out at a temperature that is of about equal to the temperature implemented during contacting step c).

The term "equal" temperature in the meaning of the present invention refers to a preheating temperature that is at most 20 °C, preferably at most 15 °C, more preferably 10 °C and most preferably at most 5 °C below or above the temperature implemented during contacting step c).

Thus, it is appreciated that the treatment layer formed on the surface of the at least one calcium carbonate-containing filler material comprises the maleic anhydride grafted polyethylene and/or maleic anhydride grafted polypropylene of step i) and the at least one hydrophobizing agent of step ii). During the contacting in step c) salty reaction product(s) of the maleic anhydride grafted polyethylene and/or maleic anhydride grafted polypropylene of step i) and/or the at least one hydrophobizing agent of step ii) may be obtained as reaction product from contacting the calcium carbonate-containing filler material with the maleic anhydride grafted polyethylene and/or maleic anhydride grafted polypropylene of step i) and the at least one hydrophobizing agent of step ii). In such a case, the treatment layer of the surface treated filler material product preferably further comprises these salty reaction product(s) formed on the surface of said at least one calcium carbonate-containing filler material in step c). For example, salty reaction product(s) such as one or more calcium salts and/or magnesium salts of the maleic anhydride grafted polyethylene and/or maleic anhydride grafted polypropylene of step i) and the at least one hydrophobizing agent of step ii).

In one embodiment, the surface treated filler material product obtained in step c) is dried. This optional step is preferably carried out in order to reduce the moisture content of the surface treated filler material product obtained. Thus, the dried surface treated filler material product obtained in step d) has a moisture content that is below the moisture content of the surface treated filler material product obtained before the drying step, i.e. after step c).

According to one embodiment of the present invention, the process thus comprises a further step d) of drying the surface treated filler material product obtained in step c).

For example, optional drying step d) is carried out at a temperature in the range from 60 to 180°C, preferably from 50 to 150°C, more preferably from 60 to 120°C and most preferably from 80 to 120°C, at ambient or reduced pressure until the moisture content of the obtained surface treated filler material product obtained is reduced.

In one embodiment, optional drying step d) is carried out until the moisture content of the obtained surface treated filler material product is in the range from 0.001 to 2 wt.-%, preferably from 0.005 to 1.5 wt.-%, more preferably from 0.01 to 1.0 wt.-% and most preferably from 0.05 to 0.5 wt.-%, based on the total weight of the surface-reacted calcium carbonate.

It is appreciated that optional drying step d) can be carried out at ambient pressure or at reduced pressure. Preferably, the drying is carried out at ambient pressure.

Thus, optional drying step d) is preferably carried out at a temperature in the range from 60 to 180°C at ambient pressure. For example, optional drying step e) is carried out at a temperature in the range from 50 to 150°C, preferably from 60 to 120°C and more preferably from 80 to 120°C at ambient pressure.

According to one embodiment, the present invention thus refers to a process for preparing a surface treated filler material product, the process comprising at least the steps of:
a) providing at least one calcium carbonate-containing filler material,
b) providing
   i. maleic anhydride grafted polyethylene and/or maleic anhydride grafted polypropylene and
   ii. at least one hydrophobizing agent and
c) forming a treatment layer on the surface of the at least one calcium carbonate-containing filler material by contacting the surface of the at least one calcium carbonate-containing filler material of step a), under mixing, in one or more steps, in any order, with 0.2 to 7 wt.-% of maleic anhydride grafted polyethylene and/or maleic anhydride grafted polypropylene of step i) and at least one hydrophobizing agent of step ii), based on the total dry weight of the at least one calcium carbonate-containing filler material, wherein the treatment layer comprises maleic anhydride grafted polyethylene and/or maleic anhydride grafted polypropylene of step i) and at least hydrophobizing agent of step ii) and
d) drying the surface treated filler material product obtained in step c).

By the inventive process it is possible to provide surface treated filler material products having good powder flowability but also a low moisture pick-up susceptibility. Furthermore, it is possible to provide surface treated filler material products having both maleic anhydride grafted polyethylene and/or maleic anhydride grafted polypropylene and at least one hydrophobizing agent present in the surface treatment layer on the at least one calcium carbonate-containing filler material.

The surface treated filler material product thus obtained is advantageously implemented in a polymer composition comprising at least one polymeric resin and from 1 to 95 wt.-% of the inventive surface treated filler material product.

In a further aspect, the present invention thus refers to a polymer composition comprising at least one polymeric resin and from 1 to 95 wt.-%, based on the total weight of the polymer composition, of the inventive surface treated filler material product.

Accordingly, the polymer composition comprises at least one polymeric resin. The polymeric resin represents the backbone of the composition and provides strength, flexibility, toughness and durability to the final fiber and/or filament and/or film and/or thread and/or sheet and/or pipe and/or profile and/or mold and/or injection molded compound and/or blow molded compound.

It is appreciated that the at least one polymeric resin according to the present invention is not restricted to a specific resin material as long as the polymer composition is suitable for the preparation of a fiber and/or filament and/or film and/or thread and/or sheet and/or pipe and/or profile and/or mold and/or injection molded compound and/or blow molded compound.

In one embodiment of the present invention, the at least one polymeric resin is at least one thermoplastic polymer. Thus, it is preferred that the at least one polymeric resin is a thermoplastic polymer selected from the group comprising homopolymers and/or copolymers of polyolefins, polyamides, halogen-containing polymers and/or polyesters.

Additionally or alternatively, the at least one polymeric resin is a homopolymer and/or copolymer of a polyolefin. For example, the at least one polymeric resin is a homopolymer and a copolymer of a polyolefin. Alternatively, the at least one polymeric resin is a homopolymer or a copolymer of a polyolefin.

It is appreciated that the at least one polymeric resin is preferably a homopolymer of a polyolefin.

For example, the polyolefin can be polyethylene and/or polypropylene and/or polybutylene. Accordingly, if the polyolefin is polyethylene, the polyolefin is selected from the group comprising homopolymers and/or copolymers of polyethylene like high-density polyethylene (HDPE), medium-density polyethylene (MDPE), low-density polyethylene (LDPE), very low-density polyethylene (VLDPE), linear low-density polyethylene (LLDPE).

For example, the polyolefin is a homopolymer and/or copolymer of polyethylene.

The expression homopolymer of polyethylene used in the present invention relates to polyethylene comprising a polyethylene that consists substantially, i.e. of more than 99.7 wt.-%, still more preferably of at least 99.8 wt.-%, based on the total weight of the polyethylene, of ethylene units. For example, only ethylene units in the homopolymer of polyethylene are detectable.

In case the at least one polymeric resin of the polymer composition comprises a copolymer of polyethylene, it is appreciated that the polyethylene contains units derivable from ethylene as major components. Accordingly, the copolymer of polyethylene comprises at least 55 wt.-% units derivable from ethylene, more preferably at least 60 wt.-% of units derived from ethylene, based on the total weight of the polyethylene. For example, the copolymer of polyethylene comprises 60 to 99.5 wt.-%, more preferably 90 to 99 wt.-%, units derivable from ethylene, based on the total weight of the polyethylene. The comonomers present in such copolymer of polyethylene are C3 to C10 α-olefins, preferably 1-butene, 1-hexene and 1-octene, the latter especially preferred.

Additionally or alternatively, the polyolefin is a homopolymer and/or copolymer of polypropylene.

The expression homopolymer of polypropylene as used throughout the instant invention relates to a polypropylene that consists substantially, i.e. of more than 99 wt.-%, still more preferably of at least 99.5 wt.-%, like of at least 99.8 wt.-%, based on the total weight of the polypropylene, of propylene units. In a preferred embodiment only propylene units are detectable in the homopolymer of polypropylene.

In case the at least one polymeric resin of the polymer composition comprises a copolymer of polypropylene, the polypropylene preferably contains units derivable from propylene as major components. The copolymer of polypropylene preferably comprises, preferably consists of, units derived from propylene and C2 and/or at least one C4 to C10 α-olefin. In one embodiment of the present invention, the copolymer of polypropylene comprises, preferably consists of, units derived from propylene and at least one α-olefin selected from the group consisting of ethylene, 1-butene, 1-pentene, 1-hexene and 1-octene. For example, the copolymer of polypropylene comprises, preferably consists of, units derived from propylene and ethylene. In one embodiment of the present invention, the units derivable from propylene constitutes the main part of the polypropylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polypropylene. The amount of units derived from C2 and/or at least one C4 to C10 α-olefin in the copolymer of polypropylene, is in the range of 1 to 40 wt.-%, more preferably in the range of 1 to 30 wt.-% and most preferably in the range of 1 to 20 wt.-%, based on the total weight of the copolymer of polypropylene.

If the copolymer of polypropylene comprises only units derivable from propylene and ethylene, the amount of ethylene is preferably in the range of 1 to 20 wt.-%, preferably in the range of 1 to 15 wt.-% and most preferably in the range of 1 to 10 wt.-%, based on the total weight of the copolymer of polypropylene. Accordingly, the amount of propylene is preferably in the range of 80 to 99 wt.-%, preferably in the range of 85 to 99 wt.-% and most preferably in the range of 90 to 99 wt.-%, based on the total weight of the copolymer of polypropylene.

Additionally or alternatively, the polyolefin is a homopolymer and/or copolymer of polybutylene.

The expression homopolymer of polybutylene as used throughout the instant invention relates to a polybutylene that consists substantially, i.e. of more than 99 wt.-%, still more preferably of at least 99.5 wt.-%, like of at least 99.8 wt.-%, based on the total weight of the polybutylene, of butylene units. In a preferred embodiment only butylene units are detectable in the homopolymer of polybutylene.

In case the at least one polymeric resin of the polymer composition comprises a copolymer of polybutylene, the polybutylene preferably contains units derivable from butylene as major components. The copolymer of polybutylene preferably comprises, preferably consists of, units derived from butylene and C2 and/or C3 and/or at least one C5 to C10 α-olefin. In one embodiment of the present invention, the copolymer of polybutylene comprises, preferably consists of, units derived from butylene and at least one α-olefin selected from the group consisting of ethylene, 1-propene, 1-pentene, 1-hexene and 1-octene. For example, the copolymer of polybutylene comprises, preferably consists of, units derived from butylene and ethylene. In one embodiment of the present invention, the units derivable from butylene constitutes the main part of the polybutylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polybutylene. The amount of units derived from C2 and/or C3 and/or at least one C5 to C10 α-olefin in the copolymer of polybutylene, is in the range of 1 to 40 wt.-%, more preferably in the range of 1 to 30 wt.-% and most preferably in the range of 1 to 20 wt.-%, based on the total weight of the copolymer of polybutylene.

If the at least one polymer is a homopolymers and/or copolymer of a polyamide, the at least one polymeric resin is preferably selected from perlon (PA6), nylon (PA6.6), nylon 11 (PA11), nylon 12 (PA12), poly(p-phenylenterephthalamid) (PPTA)and poly(m-phenylenisophthalamid) (PMPI).

If the at least one polymeric resin is a homopolymer and/or copolymer of a halogen-containing polymer, the at least one polymeric resin is preferably selected from polyvinylchloride (PVC), polyvinylidene chloride (PVDC), polyvinylidene fluoride (PVDF) and polytetrafluoroethylene (PTFE).

If the at least one polymeric resin is a homopolymer and/or copolymer of polyester, the at least one polymeric resin is preferably selected from polyethylene terephthalate (PET), polytrimethylene terephthalate (PTT), polybutylene terephthalate (PBT), polyethylene naphthalate (PEN), but also degradable polyesters, such as polylactic acid (polylactide, PLA), polybutylene adipate terephthalate (PBAT), polyhydroxyalkanoate (PHA).

In one embodiment of the present invention, the at least one polymeric resin is a homopolymer of polyethylene and/or polypropylene and/or polybutylene. For example, the at least one polymeric resin is a homopolymer of polyethylene and polypropylene. Alternatively, the at least one polymeric resin is a homopolymer of polyethylene or polypropylene. In one embodiment of the present invention, the at least one polymeric resin is a homopolymer of polypropylene.

The expression "at least one" polymeric resin means that one or more kinds of polymeric resin may be present in the inventive polymer composition.

Accordingly, it is appreciated that the at least one polymeric resin may be a mixture of two or more kinds of polymeric resins. For example, if the at least one polymeric resin is a mixture of two or more polymeric resins, one polymeric resin is a homopolymer or copolymer of polypropylene, while the second or further polymeric resin is selected from the group comprising homopolymers and/or copolymers of polyethylene, polybutylene, polyamides, polyesters, halogen-containing polymers and mixtures thereof.

In one embodiment of the present invention, the at least one polymeric resin is one kind of polymeric resin. Preferably, the at least one polymeric resin is a homopolymer of polyethylene or polypropylene and more preferably is a homopolymers of polyethylene such as linear low density polyethylene (LLDPE).

In one embodiment of the present invention, the at least one polymeric resin has a melting temperature Tm of above 80 °C, more preferably of above 100 °C. For example, the melting temperature of the at least one polymeric resin ranges from 80 to 350 °C, more preferably ranges from 100 to 300 °C and most preferably ranges from 100 to 250 °C.

Furthermore, it is appreciated that the at least one polymeric resin may be selected from polymeric resins having a broad spectrum of melt flow rate. In general, it is preferred that the at least one polymeric resin has a melt flow rate MFR (190 °C) of from 0.1 to 3 000 g/10 min, more preferably of from 0.2 to 2 500 g/10 min. For example, the at least one polymeric resin has a melt flow rate MFR (190 °C) of from 0.3 to 2 000 g/10 min or from 0.3 to 1 600 g/10 min. Additionally or alternatively, the at least one polymeric resin has a melt flow rate MFR (230 °C) of from 0.1 to 3 000 g/10 min, more preferably of from 0.2 to 2 500 g/10 min. For example, the at least one polymeric resin has a melt flow rate MFR (230 °C) of from 0.3 to 2 000 g/10 min or from 0.3 to 1 600 g/10 min.

If the at least one polymeric resin is a polyolefin being a homopolymer and/or copolymer of polyethylene, it is appreciated that the at least one polymeric resin has a rather low melt flow rate. Accordingly, it is preferred that the at least one polymeric resin which is a homopolymer and/or copolymer of polyethylene has a melt flow rate MFR (190 °C) of from 0.5 to 20 g/10 min, more preferably of from 0.7 to 15 g/10 min. For example, the at least one polymeric resin has a melt flow rate MFR (190 °C) of from 0.9 to 10 g/10 min or from 0.9 to 5 g/10 min. Additionally or alternatively, the at least one polymeric resin which is a homopolymer and/or copolymer of polyethylene has a melt flow rate MFR (230 °C) of from 0.1 to 3 000 g/10 min, more preferably of from 0.2 to 2 500 g/10 min. For example, the at least one polymeric resin which is a homopolymer and/or copolymer of polyethylene has a melt flow rate MFR (230 °C) of from 0.3 to 2 000 g/10 min or from 0.3 to 1 600 g/10 min.

According to another embodiment of the present invention, the polymer composition further comprises natural fibers, preferably wood fibers, cellulose fibers, hemp fibers and/or agricultural waste fibers and/or synthetic fibers, preferably glass fibers, carbon fibers and/or aramid fibers.

"Natural fibers" according to the present invention are fibers that occur naturally, for example in wood, cellulose, hemp or agricultural waste products such as sugarcane, bananas, corn stalks or rice straw. "Synthetical fibers" are fibers that are produced synthetically, for example, from glass, carbon or aramid. Such fibers are commercially available and are known to the skilled person. The skilled person is able to the select appropriate fibers based on the respective application of the polymer composition.

According to a preferred embodiment of the present invention, the polymer composition comprises at least one polymeric resin, from 1 to 95 wt.-%, based on the total weight of the polymer composition of a surface treated filler material product according to the present invention and natural fibers and/or synthetic fibers.

According to another preferred embodiment of the present invention, the polymer composition comprises at least one polymeric resin, from 1 to 95 wt.-%, based on the total weight of the polymer composition of a surface treated filler material product according to the present invention and natural fibers and/or synthetic fibers, wherein the at least one polymeric resin is a thermoplastic polymer selected from the group comprising homopolymers and/or copolymers of polyolefins, polyamides, halogen-containing polymers and/or polyesters, and preferably is selected from the group consisting of polyethylene, polypropylene and mixtures thereof.

A further essential component of the present polymer composition is the surface treated filler material product. With regard to the definition of the surface treated filler material product and preferred embodiments thereof, reference is made to the comments provided above.

It is one requirement of the present invention that the polymer composition comprises the surface treated filler material product in an amount of 1 to 95 wt.-%, based on the total weight of the polymer composition.

In one embodiment of the present invention, the polymer composition comprises the surface treated filler material product in an amount of from 5 to 95 wt.-% and preferably from 10 to 85 wt.-%, based on the total weight of the polymer composition. For example, the polymer composition comprises the surface treated filler material product in an amount of from 15 to 80 wt.-%, based on the total weight of the polymer composition.

In one embodiment of the present invention, the polymer composition is a masterbatch.

The term "masterbatch" refers to a composition having a concentration of the surface treated filler material product that is higher than the concentration of the polymer composition used for preparing the final application product such as a fiber and/or filament and/or film and/or thread and/or sheet and/or pipe and/or profile and/or mold and/or injection molded compound and/or blow molded compound. That is to say, the masterbatch is further diluted such as to obtain a polymer composition which is suitable for preparing the final application product such as a fiber and/or filament and/or film and/or thread and/or sheet and/or pipe and/or profile and/or mold and/or injection molded compound and/or blow molded compound.

For example, the masterbatch comprises the surface treated filler material product in an amount of from 20 to 95 wt.-%, preferably from 30 to 85 wt.-% and more preferably from 35 to 80 wt.-%, based on the total weight of the masterbatch.

According to one embodiment of the present invention, the masterbatch is used to produce fibers and/or filaments and/or films and/or threads.

In another embodiment of the present invention, the polymer composition used for preparing the final application product such as fiber and/or filament and/or film and/or thread and/or sheet and/or pipe and/or profile and/or mold and/or, injection molded compound and/or blow molded compound comprises the surface treated filler material product in an amount of from 1 to 70 wt.-%, preferably of from 5 to 55 wt.-% and most preferably from 10 to 50 wt.-%, based on the total weight of the polymer composition. For example, the polymer composition used for preparing the final application product such as a fiber and/or filament and/or film comprises the surface treated filler material product in an amount of from 20 to 50 wt.-%, based on the total weight of the polymer composition.

If a masterbatch is used to produce a fiber and/or filament and/or film and/or thread and/or sheet and/or pipe and/or profile and/or mold and/or injection molded compound and/or blow molded compound, it is preferred that the masterbatch is diluted such as to obtain a polymer composition suitable for preparing the final application product such as a fiber and/or filament and/or film and/or thread and/or sheet and/or pipe and/or profile and/or molded compound and/or injection molded compound and/or blow molded compound. That is to say, the masterbatch is diluted such as to comprise the surface treated filler material product in an amount of from 1 to 70 wt.-%, preferably of from 5 to 55 wt.-% and most preferably from 10 to 50 wt.-%, based on the total weight of the polymer composition.

According to another embodiment of the present invention, the polymer composition is a fiber and/or filament and/or film and/or thread and/or sheet and/or pipe and/or profile and/or mold and/or injection molded compound and/or blow molded compound. For example, the fiber and/or filament and/or film and/or thread and/or sheet and/or pipe and/or profile and/or molded compound and/or injection molded compound and/or blow molded compound comprises the surface treated filler material product in an amount of from 1 to 70 wt.-%, preferably from 5 to 55 wt.-%, more preferably from 10 to 50 wt.-% and most preferably from 15 to 30 wt.-%, based on the total weight of the fiber and/or filament and/or film and/or thread and/or sheet and/or pipe and/or profile and/or molded compound and/or injection molded compound and/or blow molded compound.

In view of the good flowability characteristics of the surface treated filler material product as well as its good dispersion in polymer compositions, the surface treated filler material product according to the present invention can be advantageously used in final application products such as a fiber and/or filament and/or film and/or thread and/or sheet and/or pipe and/or profile and/or mold and/or injection molded compounds and/or blow molded compounds. In view of this, the surface treated filler material product imparts excellent mechanical and/or rheological properties to final application products such as a fiber and/or filament and/or film and/or thread and/or sheet and/or pipe and/or profile and/or mold and/or injection molded compounds and/or blow molded compounds, when the surface treated filler material product is provided in form of the polymer composition of the present invention.

The term "fiber" in the meaning of the present invention refers to a linear structure forming textile fabrics such as nonwovens which typically consist of fiber webs bonded together by e.g. mechanical methods. Accordingly, the term "fiber" is understood to refer to a finite structure.

The term "thread" in the meaning of the present invention refers to a linear structure forming textile fabrics such as nonwovens which typically consist of thread webs bonded together by e.g. mechanical methods. Accordingly, the term "thread" is understood to refer to a finite structure.

The term "filament" in the meaning of the present invention refers to a structure that differs from fibers by its structure length. Accordingly, the term "filament" is understood to refer to endless fibers. It is further appreciated that the filament may be constructed as mono-, bi- or multi-filament.

The cross-section of the filaments and/or fibers and/or threads may have a great variety of shapes. It is preferred that the cross-sectional shape of the filaments and/or fibers and/or threads may be round, oval or n-gonal, wherein n is ≥ 3, e.g. n is 3. For example, the cross-sectional shape of the filaments and/or fibers and/or threads is round or trilobal, like round. Additionally or alternatively, the cross-sectional shape of the filaments and/or fibers and/or threads is hollow.

It is appreciated that the filaments and/or fibers and/or threads may be prepared by all techniques known in the art used for preparing such filaments and/or fibers and/or threads. For example, the filaments and/or fibers and/or threads of the present invention can be prepared by the well-known melt-blown process, extrusion molding process, compression molding process, injection molding process, spunbonded process or staple fibre production.

The term "film" in the meaning of the present invention refers to a structure that differs from filaments and/or fibers by its dimensional structure. Accordingly, the term "film" is understood to refer to a sheet.

It is appreciated that the films may be prepared by all techniques known in the art used for preparing such films. For example, the films of the present invention can be prepared by the well-known techniques used for preparing stretched / oriented films, and preferably extrusion coating films, blown films, technical blown films, monotapes, cast films and the like.

According to another embodiment of the present invention, the inventive surface treated filler material products treated as defined above, are used in polymer compositions, preferably a polyethylene or polypropylene composition, for improving the mechanical and/or rheological properties of the polymer composition, in comparison to the same polymer composition that has been treated the same way, wherein the surface treated mineral filler product has merely been treated with at least one hydrophobizing agent. The inventors surprisingly found out that when the inventive surface treated filler material products are used in polymer compositions they maintain or improve the mechanical and/or rheological properties of the polymer composition and/or of the final application products, especially in comparison to a surface treated filler material product being surface treated only with an identical hydrophobizing agent. Even if surface treated filler material products that have only treated with a hydrophobizing agent already show good powder flowability and low moisture pick up susceptibility, the mechanical and/or rheological properties of polymer compositions comprising such products are weak. However, the inventors found out that when the inventive surface treated filler product comprising a treatment layer on the surface of the at least one calcium carbonate-containing filler material comprising maleic anhydride grafted polyethylene and/or maleic anhydride grafted polypropylene and at least one hydrophobizing agent is used in polymer compositions, the polymer compositions and/or the final application products have maintained or improved mechanical and/or rheological properties. Especially they have a maintained or lower melt flow rate and/or maintained or higher top load properties and/or maintained or higher impact strength and/or maintained or higher flexural modulus and/or maintained or higher tensile properties such as strength at yield - in particular in comparison with a polymer composition and/or final application product comprising a surface treated filler material product being surface treated only with an identical hydrophobizing agent.

The term "in comparison to the same polymer composition that has been treated the same way wherein the surface treated mineral filler product has been merely treated with at least one hydrophobizing agent" according to the present invention refers to a comparative polymer composition wherein the surface treated mineral filler product has merely been treated with at least one hydrophobizing agent according to the present invention but not with maleic anhydride grafted polyethylene and/or maleic anhydride grafted polypropylene according to the present invention. Apart from that the polymer composition according to the present invention and the comparative polymer composition are identical which means that they comprise the same compounds. Furthermore, these two polymer compositions have been treated the same way which means that the compounding and storing treatments are identical.

The following examples may additionally illustrate the invention but are not meant to restrict the invention to the exemplified embodiments.

### Experiments

### I. Analytical methods

### Powder flowability - stability and variable flow rate method

The Basic flowability energy (BFE), stability index (SI), specific energy (SE), flow rate index (FRI) and conditioned bulk density (CBD) are measured on a FT4 Powder Rheometer (Freeman Technology, UK) equipped with the Powder Rheometer software (v 5.000.00012) and Freeman Technology Data Analysis Software version 4.0.17, using the stability and variable flow rate method.

This method consists of filling a cylindric vessel (25 mm x 25 mL glass vessel). The first stage of the test process is to obtain a homogeneous, conditioned powder state to allow highly repeatable measurements to be made. A conditioning cycle comprises of the dynamic test blade slicing downward through the powder followed by an upward traverse that lifts the powder and drops it over the blade. This process helps to remove the effect of different sampling methodologies and powder storage times.

After that initial conditioning step, the powder volume is adjusted to the vessel size to remove excess powder ("split") - and the mass is recorded after the splitting step. Following that, 8 repeating cycles of conditioning and measurements with a 23.5 mm blade are performed. For each test cycle, the blade is inserted into the powder bed downward (anti-clockwise, tip speed -100 mm/s, helix angle = 5° / target height 5 mm), and upward. For conditioning steps, the blade is inserted into the powder bed downwards (tip speed-40 mm/s / helix angle 5°, target height 5 mm), and upwards.

After those 8 tests, 3 more cycles of (conditioning + tests) are performed at variable flow rates, i.e. with a blade tip speed of 70 mm/s (Test 9), 40 mm/s (Test 10) and finally 10 mm/s (Test 11). The energy and torque are recorded and allow to calculate various flow parameters, defined as follow:
- Basic flowability energy (BFE, mJ): Energy Cycle 7 (downwards)
- Stability index: (Energy Test 7) / (Energy Cycle 1)
- Specific energy (SE, mJ/g): (Up Energy cycle 6 + Up Energy cycle 7) / (2 x split mass)
- Flow Rate Index (FRI): (Energy Test 11) / (Energy Test 8)
- Conditioned bulk density (CBD, g/mL): (Split mass) / (Split volume)

### Melt Flow Rate

The melt flow index is measured according to ISO 1133-1:2011 on a CEAST Instrument equipped with the software Ceast View 6.15 4C. The length of the die is 8mm and its diameter is 2.095 mm. Measurements are performed at 190 °C with 300 s of preheating without load, then a nominal load of 2.16 kg is used and the melt flow is measured along 20 mm.

### Tensile properties

The tensile properties are measured according to ISO527-1:2012 Type BA(1:2) on a Allround Z020 traction device from Zwick Roell. Measurements are performed with an initial load of 0.1 MPa. For the measurement of the E-modulus a speed of 1mm/min is used, then it is increased to 500 mm/min. The tensile strain at break is obtained under standard conditions. All measurements are performed on samples that have been stored under similar conditions after preparation.

### Flexural properties

The flexural properties are measured according to ISO 178:2013-09 on a Allround Z020 traction device from Zwick Roell. Measurements are performed with a preforce of 2N. For the measurement of the flexural modulus a speed of 1.72mm/min is used, then it is increased to 10 mm/min. the test is stopped after 3.5% of deformation.

All measurements are performed on samples that have been stored under similar conditions after preparation.

### Impact properties

The impact properties are measured according to ISO 179-1eU:2010-11 on a HIT5.5P device from Zwick Roell. Measurements are performed on un-notched samples with a hammer of 5J. All measurements are performed on samples that have been stored under similar conditions after preparation.

### Top load properties

The top load properties are measured on bottles with a handle and a nominal volume of 1.5L on a Hounsfield H10 KM instrument. Measurements are performed with a load measuring range of 2000N at 10mm/min.

All measurements are performed on samples that have been stored under similar conditions after preparation.

### Moisture pick up susceptibility

The moisture pick up susceptibility of a material as referred to herein is determined in mg moisture/g after exposure to an atmosphere of 10 and 85 % relative humidity, respectively, for 2.5 hours at a temperature of +23°C (± 2°C). For this purpose, the sample is first kept at an atmosphere of 10 % relative humidity for 2.5 hours, then the atmosphere is changed to 85 % relative humidity at which the sample is kept for another 2.5 hours. The weight increase between 10 and 85 % relative humidity is then used to calculate the moisture pick-up in mg moisture/g of sample.

### Particle size distribution (mass % particles with a diameter < X) and weight median diameter (d₅₀) of a particulate material

As used herein and as generally defined in the art, the "d₅₀" value is determined based on measurements made by using a Sedigraph™ 5100 of Micromeritics Instrument Corporation and is defined as the size at which 50 % (the median point) of the particle mass is accounted for by particles having a diameter equal to the specified value.

The method and the instrument are known to the skilled person and are commonly used to determine grain size of fillers and pigments. The measurement is carried out in an aqueous solution of 0.1 wt.-% Na₄P₂O₇. The samples are dispersed using a high speed stirrer and supersonics.

### BET specific surface area of a material

Throughout the present document, the specific surface area (in m²/g) of the mineral filler is determined using the BET method (using nitrogen as adsorbing gas), which is well known to the skilled man (ISO 9277:2010). The total surface area (in m²) of the mineral filler is then obtained by multiplication of the specific surface area and the mass (in g) of the mineral filler prior to treatment.

### Amount of surface-treatment layer

The amount of the treatment layer on the calcium carbonate-comprising filler material is calculated theoretically from the values of the BET of the untreated calcium carbonate-containing filler material and the amount of maleic anhydride grafted polyethylene and/or maleic anhydride grafted polypropylene and at least one hydrophobizing agent that are used for the surface-treatment. It is assumed that 100 % of the maleic anhydride grafted polyethylene and/or maleic anhydride grafted polypropylene and at least on hydrophobizing agent added to the calcium carbonate-containing filler material are present as surface treatment layer on the surface of the calcium carbonate-containing filler material.

### II. Experimental part

### Part 1: Surface-treated calcium carbonate preparation

### Materials used in the examples:

### 1. Hydrophobizing agent 01: ASA 1

Mono-substituted alkenyl succinic anhydride (2,5- Furandione, dihydro-, mono-C₁₅-₂₀-alkenyl derivs., CAS No. 68784-12-3) is a blend of mainly branched octadecenyl succinic anhydrides (CAS #28777-98-2) and mainly branched hexadecenyl succinic anhydrides (CAS #32072-96-1). More than 80% of the blend is branched octadecenyl succinic anhydrides. The purity of the blend is > 95wt%. The residual olefin content is below 3 wt%.

### 2. Hydrophobizing agent 02: Fatty acids mixture 2

Fatty acid mixture 2 is a 1:1 mixture of stearic acid and palmitic acid.

### 3. Maleic anhydride grafted polyethylene/polypropylene: Maleic anhydride-grafted PE 3

MA-grafted PE 3 is a functionalized metallocene catalyst based polyethylene wax (grafted with maleic anhydride) produced by Clariant (Licocene PEMA 4351 fine grain), with an acid value of 42-49 mg KOH/g and a viscosity of 200-500 mPa·s at 140 °C.

### 4. Calcium carbonate-containing filler material CC1

The calcium carbonate CC1 is a wet ground and spray dried calcium carbonate from Italy (d₅₀ = 1.9 µm, d₉₈ = 5.8 µm).

### 5. Calcium carbonate-containing filler material CC2

The calcium carbonate CC2 is dry ground calcium carbonate from Italy (marble, d₅₀ = 3.3 µm, d₉₈ = 13.8 µm, BET SSA = 2.6 m²/g).

### 6. Polymer resin

The polymer resin is Resinex PE RXP 1303 Natural commercially available from Resinex or HDPE Lupolen 5021 DX commercially available from LyondellBasell Industries.

### Surface treatment process

Surface treatments were carried in a high speed mixer (Somakon MP-LB Mixer, Somakon Verfahrenstechnik, Germany), and conditioned by stirring for 10 minutes at the treatment temperature (600-1000 rpm). After that time, the additives were added to the mixture and stirring and heating is then continued for another 15 minutes for each step (600-1000 rpm). After that time, the mixture is allowed to cool and the powder is collected.

**Table 1: Preparation of the surface treated filler material product.**

| Example | Calcium carbonate (type and amount, kg) | Additive 1 (parts by weight per hundred parts CaCO₃) | Additive 2 (parts by weight per hundred parts CaCO₃) | Treatment temperature |
|---|---|---|---|---|
| Powder 1 | CC1 | Fatty acid mixture 2 (1.0) | / | 120 °C |
| | 1.1 | | | |
| Powder 2 | CC1 | ASA 1 (0.8) | / | 120 °C |
| | 1.1 | | | |
| Powder 3 | CC1 | MA-grafted PE3 (2) | / | 150 °C |
| | 1.1 | | | |
| Powder 4 | CC1 | Fatty acid mixture 2 (0.5) (added at the same time as additive 2) | MA-grafted PE3 (2)(added at the same time as additive 1) | 150 °C |
| | 1.1 | | | |
| Powder 5 | CC1 | MA-grafted PE3 (2) (addition step 1) | Fatty acid mixture 2 (0.5) (addition step 2) | 150 °C (step 1) |
| | 1.1 | | | 120 °C (step 2) |
| Powder 6 | CC1 | MA-grafted PE3 (2) (addition step 1) | ASA 1 (0.375) (addition step 2) | 150 °C (step 1) |
| | 1.1 | | | 120 °C (step 2) |
| Powder 7 | CC2 | Fatty acid mixture 2 (0.65) | / | 120 °C |
| | 3.0 | | | |
| Powder 8 | CC2 | MA-grafted PE3 (2) | / | 150 °C |
| | 3.0 | | | |
| Powder 9 | CC2 | MA-grafted PE3 (1.6) | Fatty acid mixture 2 (0.45) | 150 °C (step 1) |
| | 3.0 | | | 120 °C (step 2) |

### Part 2: Effect of the surface treated filler material on the melt flow rate of a polymer composition:

Masterbatches MB1 to MB7 were produced on a twin-screw extruder 25:1 from Three Tec (Extruder Type ZE12, die: 0.5 mm) with the following line settings:

| | |
|---|---|
| - Extruder temperatures: | 20 °C (feeding) - 190 °C / 210 °C / 210 °C / 190 °C |
| - Feeding speed: | 7% |
| - Screw speed: | 20 rpm |
| - Conveyor speed: | 1.4 rpm |
| - Cut speed: | 21 rpm |

The polymer used is a linear low-density polyethylene (LLDPE) that can be obtained from Resinex under the tradename RXP Natural 1303.

**Table 2: preparation and composition of masterbatches MB 1 to MB 7**

| Sample | Polymer (wt%) | Surface treated filler material (wt%) | Additional Additive (wt%) |
|---|---|---|---|
| MB-1 | Resinex PE RXP 1303 Natural (60%) | Powder 1 (40%) | / |
| MB-2 | Resinex PE RXP 1303 Natural (60%) | Powder 2 (40%) | / |
| MB-3 | Resinex PE RXP 1303 Natural (60%) | Powder 3 (40%) | / |
| MB-4 | Resinex PE RXP 1303 Natural (60%) | Powder 1(39.2%) | MA-grafted PE3 (0.8%) |
| MB-5 | Resinex PE RXP 1303 Natural (60%) | Powder 4 (40%) | / |
| MB-6 | Resinex PE RXP 1303 Natural (60%) | Powder 5 (40%) | / |
| MB-7 | Resinex PE RXP 1303 Natural (60%) | Powder 6 (40%) | / |

**Table 3: Melt flow rate**

| | MB-1 | MB-2 | MB-3 | MB-5 | MB-6 | MB-7 |
|---|---|---|---|---|---|---|
| MFI (g/10min) | 4.60 | 4.87 | 3.68 | 4.31 | 4.53 | 4.49 |

As can be seen from table 3 the treatment of the calcium carbonate-containing filler material with maleic anhydride grafted polyethylene/polypropylene (MB-3) only results in a lower MFI - which can make processing more complicated. By doing an appropriate co-treatment (MB-5 to MB-7) with at least one hydrophobizing agent, one can moderate this decrease of MFI due to the MA-grafted PE and almost match the melt rheology obtained with a standard fatty acid-treated calcium carbonate (MB-1).

### Part 3: Effect on impact and flexural properties

Plates were made in a Dr Collin P300 Press with pellets produced as described in example 1 with the settings indicated in table 4:

**Table 4: Press conditions**

| | | | |
|---|---|---|---|
| Temperature | 190 °C | 190 °C | 20 °C |
| Pressure | 20 bars | 200 bars | 120 bars |
| Time | 60 s | 120 s | 120 s |

The dimension of the produced plates is 170mm x 170mm x 4mm. The impact bar tests were cut to the required dimensions for Charpy test ISO179-1eU and flexural test ISO178. Impact tests are made according to ISO179-1eU (un-notched).

**Table 5: Impact properties according to ISO179-1eU**

| | MB-1 | MB-2 | MB-5 | MB-6 | MB-7 |
|---|---|---|---|---|---|
| Resilience (kJ/m²) | 69.8 | 65.7 | 81.4 | 78.2 | 76.5 |

As can be seen from table 5 the impact strength /resilience can be improved by a co-treatment (MB-5, MB-6 and MB-7) when compared to a surface-treated calcium carbonate (MB-1 and MB-2) comprising only a hydrophobizing agent without maleic anhydride grafted polyethylene/polypropylene.

Flexural tests are made according to ISO178.

**Table 6: Flexural properties according to ISO-178**

| | MB-1 | MB-2 | MB-5 | MB-6 | MB-7 |
|---|---|---|---|---|---|
| Flexural modulus (Mpa) | 369 | 292 | 399 | 412 | 419 |
| Flexural strain at 3.5% (N/mm²) | 10.2 | 9.5 | 11.6 | 12 | 12.1 |

As can be seen from table 6 the flexural properties can be improved by a co-treatment (MB-5, MB-6 and MB-7) when compared to a surface-treated calcium carbonate (MB-1 and MB-2) comprising only a hydrophobizing agent without maleic anhydride grafted polyethylene/polypropylene.

### Part 4: Effect on tensile properties

Films for tensile tests were produced on a twin-screw extruder 25:1 from Three Tec (Extruder Type ZE12, die: 20 x 0.5 mm) respecting the same quantities used for masterbatches production (see Table 7) and with the following line settings:

| | |
|---|---|
| - Extruder temperatures: | 20°C (feeding) - 190°C / 210°C / 210C / 190°C |
| - Feeding speed: | 17% |
| - Screw speed: | 60rpm |
| - Conveyor speed: | 1 |

**Table 7: Films preparation and composition**

| Sample | Polymer (wt%) | Surface treated filler material (wt%) | Additional Additive (wt%) |
|---|---|---|---|
| F-1 | Resinex PE RXP 1303 Natural (60%) | Powder 1 (40%) | / |
| F-2 | Resinex PE RXP 1303 Natural (60%) | Powder 2 (40%) | / |
| F-3 | Resinex PE RXP 1303 Natural (60%) | Powder 3 (40%) | / |
| F-4 | Resinex PE RXP 1303 Natural (60%) | Powder 1 (40%) | MA-grafted PE3 (0.8) |
| F-5 | Resinex PE RXP 1303 Natural (60%) | Powder 4 (40%) | / |
| F-6 | Resinex PE RXP 1303 Natural (60%) | Powder 5 (40%) | / |
| F-7 | Resinex PE RXP 1303 Natural (60%) | Powder 6 (40%) | / |

The effect of the treated minerals on the strength at yield is presented in Table 8.

**Table 8: Tensile properties of the films - effect on the strength at yield**

| | F-1 | F-2 | F-4 | F-5 | F-6 | F-7 |
|---|---|---|---|---|---|---|
| Strength at yield (N/mm²) | 9.7 | 10.4 | 12.2 | 12.8 | 13.1 | 14.1 |
| Standard deviation | 0.2 | 0.2 | 0.2 | 0.2 | 0.2 | 0.2 |

As can be seen from table 8 the strength at yield can be surprisingly improved by a co-treatment (F-5 to F-7) when compared both to surface treated calcium carbonate (F-1 and F-2) comprising only a hydrophobizing agent without maleic anhydride grafted polyethylene/polypropylene but also when compared to the use of the same quantity of MA-grafted PE as an additive during compounding together with a surface treated calcium carbonate (F-4) comprising a hydrophobizing agent.

### Part 5: Effect of the treatment on powder rheology

**Table 9: Powder flowability**

| Powder | BFE, mJ | CBD, g/ml |
|---|---|---|
| Powder 1 | 52.76 | 0.79 |
| Powder 3 | 208.43 | 0.66 |
| Powder 4 | 64.94 | 0.80 |
| Powder 5 | 55.96 | 0.72 |

As can be seen from table 9 a treatment purely with MA-grafted PE (Powder 3) has a dramatic effect on the powder flowability compared to a standard fatty acid-treated calcium carbonate (Powder 1) resulting in a large increase of BFE value. The co-treated filler material powders (Powder 4 and Powder 5) have better flow properties (BFE values) than the powder treated only with a MA-grafted PE (Powder 3). They almost match the flowability performance of powders treated only with a fatty acid as hydrophobizing agent (Powder 1). This is an important parameter as the bad flowability of Powder 3 could be a drawback for the processing.

Besides, the bulk density (CBD) is also surprisingly higher for Powder 4 and Powder 5 that for Powder 3. A higher bulk density can be an advantage for storage and transport of the materials.

### Part 6: Effect on the moisture pick-up susceptibility

**Table 10: Moisture pick-up susceptibility**

| Powder | Moisture pick-up susceptibility (mg/g) |
|---|---|
| Powder 1 | 0.2 |
| Powder 2 | 0.4 |
| Powder 3 | 1.2 |
| Powder 4 | 0.7 |
| Powder 5 | 0.6 |
| Powder 6 | 0.8 |

As can be seen from table 10 the moisture pick-up susceptibility of a calcium carbonate treated with MA-grafted PE (Powder 3) only is relatively high (much higher than standard fatty acid or ASA-treated calcium carbonates, Powder 1 and Powder 2). The co-treated samples (Powder 4 to 6) have much lower moisture pick-up susceptibilities than Powder 3, which is an important parameter in polyolefins applications.

### Part 7: Effect of the treatment on the top-load of blow-molded HDPE bottles

Masterbatches MB8 to MB10 were produced on a Buss Co-Kneader 46mm with the following settings:
- Temperature profile of the extruder: 170 °C/190 °C/190 °C/235 °C
- Screw speed: 200 rpm

**Table 11: preparation and composition of masterbatches MB8 to MB10**

| Sample | Polymer (wt%) | Surface treated filler material (wt%) |
|---|---|---|
| MB-8 | HDPE Lupolen 5021 DX (60%) | Powder 7 (40%) |
| MB-9 | HDPE Lupolen 5021 DX (60%) | Powder 8 (40%) |
| MB-10 | HDPE Lupolen 5021 DX (60%) | Powder 9 (40%) |

Blow molded bottles containing a filler level of 7.5 wt.-% or 15 wt.-% surface treated filler material were then produced on a Blow moulding Machine Krupp Kautex KEB 4 with continuous extrusion using the following parameters:
- Temperature profile of the extruder: 190 °C - 200 °C
- Head temperature: 210 °C
- Screw speed: 16rpm
- Cycle time: 16s
- Nozzle gab: 1.85mm

The compositions of the produced bottles are summarized in Table 12:
Top-load properties were evaluated on a Hounsfield H10 KM instrument with the following parameters:
- Test speed: 10 mm/min
- Sampling rate: 10 measurements/s
- Load measuring range: 2000N

**Table 12: preparation and composition of bottles B-1 to B-6**

| Sample | Masterbatch used (wt%) | Polymer (wt%) | Filler amount in end product (wt%) | Top load (first failure, N) | Top load (maximum, N) |
|---|---|---|---|---|---|
| B-1 | MB-8 (18.75) | HDPE Lupolen 5021 DX (81.25%) | 7.5 | 356.4 | 391.4 |
| B-2 | MB-9 (18.75) | HDPE Lupolen 5021 DX (81.25%) | 7.5 | 346.6 | 394.6 |
| B-3 | MB-10 (18.75) | HDPE Lupolen 5021 DX (81.25%) | 7.5 | 372 | 416.2 |
| B-4 | MB-8 (37.5) | HDPE Lupolen 5021 DX (62.5%) | 15 | 356.25 | 368.5 |
| B-5 | MB-9 (37.5) | HDPE Lupolen 5021 DX (62.5%) | 15 | 358.8 | 376 |
| B-6 | MB-10 (37.5) | HDPE Lupolen 5021 DX (62.5%) | 15 | 365.8 | 389.2 |

As can be seen from table 12 the top load (first failure as well as maximum) of B-3 and B-6 that comprise a surface treated filler material product according to the present inventive is higher than the top load (first failure as well as maximum) of B-1 and B-2 or B-4 and B-5 that comprise a comparative surface treated filler material product.

## Claims

1. A surface treated filler material product comprising
a) at least one calcium carbonate-containing filler material,
b) a treatment layer on the surface of the at least one calcium carbonate-containing filler material comprising
i. maleic anhydride grafted polyethylene and/or maleic anhydride grafted polypropylene and
ii. at least one hydrophobizing agent
wherein the surface treated filler material product comprises the treatment layer in an amount of from 0.2 to 7 wt.-%, based on the total dry weight of the at least one calcium carbonate-containing filler material.

2. The surface treated filler material product according to claim 1, wherein the at least one hydrophobizing agent is selected from the group consisting of succinic anhydrides, carboxylic acids, phosphoric acid mono-esters, phosphoric acid di-esters, reaction products thereof and mixtures thereof.

3. The surface treated filler material product according to any of the preceding claims, wherein the at least one hydrophobizing agent is at least one of
mono-substituted succinic anhydride and/or reaction product(s) thereof and
aliphatic linear and/or branched carboxylic acid(s) having from 8 to 24 carbon atoms and/or reaction product(s) thereof.

4. The surface treated filler material product according to claim 3, wherein the mono-substituted succinic anhydride and/or reaction product(s) thereof of step ii) consist(s) of succinic anhydride mono-substituted with a group selected from a linear, branched, aliphatic and cyclic group having from 2 to 30 carbon atoms, preferably from 3 to 25 and most preferably from 4 to 20 in the substituent.

5. The surface treated filler material product according to claims 3 to 4, wherein the mono-substituted succinic anhydride and/or reaction product(s) thereof of step ii) is/are
a) at least one alkyl mono-substituted succinic anhydride, preferably at least one alkyl mono-substituted succinic anhydride selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof, and/or
b) at least one alkenyl mono-substituted succinic anhydride, preferably at least one alkenyl mono-substituted succinic anhydride selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

6. The surface treated filler material product according to claims 3 to 5, wherein the aliphatic linear and/or branched carboxylic acid(s) and/or reaction product(s) thereof of step ii) have from 8 to 22 carbon atoms, preferably from 10 to 22, more preferably from 12 to 20 even more preferably from 14 to 20 and most preferably the aliphatic linear and/or branched carboxylic acid(s) and/or reaction product(s) thereof is stearic acid, palmitic acid or mixtures thereof.

7. The surface treated filler material product according to any of the preceding claims, wherein the calcium carbonate-containing filler material of step a) is selected from the group consisting of ground calcium carbonate, preferably marble, limestone, dolomite and/or chalk and/or, precipitated calcium carbonate (PCC), preferably vaterite, calcite and/or aragonite, more preferably the calcium carbonate-containing filler material is ground calcium carbonate.

8. The surface treated filler material product according to any of the preceding claims, wherein the at least one calcium carbonate-containing filler material of step a) has
a) a weight median particle size *d*₅₀ value in the range from 0.1 µm to 7 µm, preferably from 0.25 µm to 5 µm and most preferably from 0.5 µm to 4 µm, and/or
b) a top cut (*d*₉₈) of ≤ 100 µm, preferably ≤ 40 µm, more preferably ≤ 25 µm and most preferably ≤ 15 µm, and/or
c) a specific surface area (BET) of from 0.5 to 150 m²/g, preferably from 0.5 to 50 m²/g, more preferably from 0.5 to 35 m²/g and most preferably from 0.5 to 10 m²/g as measured by the BET nitrogen method, and/or
d) a residual total moisture content of from 0.01 wt.-% to 1 wt.-%, preferably from 0.01 to 0.2 wt.-%, more preferably from 0.02 to 0.2 wt.-% and most preferably from 0.03 to 0.2 wt.-%, based on the total dry weight of the at least one calcium carbonate-containing filler material.

9. The surface treated filler material product according to any of the preceding claims, wherein the maleic anhydride grafted polyethylene and/or maleic anhydride grafted polypropylene of step i) is selected from the group consisting of maleic anhydride grafted low density polyethylene (LDPE), maleic anhydride grafted linear low density polyethylene (LLDPE), maleic anhydride grafted high density polyethylene (HDPE), maleic anhydride grafted atactic polypropylene, maleic anhydride grafted isotactic polypropylene, maleic anhydride grafted syndiotactic polypropylene, maleic anhydride grafted polyethylene wax, maleic acid anhydride grafted polypropylene wax and mixtures thereof and preferably is maleic anhydride grafted linear low density polyethylene (LLDPE) and maleic anhydride grafted polyethylene wax and most preferably is maleic anhydride grafted polyethylene wax.

10. The surface treated filler material product according to any of the preceding claims, wherein the surface treated filler material product is in form of a powder.

11. A process for preparing a surface treated filler material product, the process comprising at least the steps of:
a) providing at least one calcium carbonate-containing filler material,
b) providing
i. maleic anhydride grafted polyethylene and/or maleic anhydride grafted polypropylene and
ii. at least one hydrophobizing agent and
c) forming a treatment layer on the surface of the at least one calcium carbonate-containing filler material by contacting the surface of the at least one calcium carbonate-containing filler material of step a), under mixing, in one or more steps, in any order, with 0.2 to 7 wt.-% of maleic anhydride grafted polyethylene and/or maleic anhydride grafted polypropylene of step i) and at least one hydrophobizing agent of step ii), based on the total dry weight of the at least one calcium carbonate-containing filler material,
wherein the treatment layer comprises maleic anhydride grafted polyethylene and/or maleic anhydride grafted polypropylene of step i) and at least hydrophobizing agent of step ii).

12. The process for preparing the surface treated filler material product according to any of the preceding claims, wherein the at least one calcium carbonate-containing filler material of step a) is preheated before contacting step c) is carried out, preferably the at least one calcium carbonate-containing filler material of step a) is preheated at a temperature of from 20 to 250 °C, more preferably of from 40 to 200 °C, even more preferably of from 50 to 150 °C and most preferably of from 60 to 140 °C.

13. The process for preparing the surface treated filler material product, wherein contacting step c) is carried out in that the maleic anhydride grafted polyethylene and/or maleic anhydride grafted polypropylene of step i) and the at least one hydrophobizing agent of step ii) are added in a weight ratio of from 10:1 to 1:10, preferably from 5:1 to 1:5 and most preferably from 4:1 to 1:4, such as in an amount of 1:1.

14. The process for preparing the surface treated filler material product according to any of the preceding claims, wherein the maleic anhydride grafted polyethylene and/or maleic anhydride grafted polypropylene of step i) is added in contacting step c) in a total amount of from 0.1 to 4 wt.-%, preferably of from 0.2 to 3 wt.-% and most preferably of from 0.5 to 2 wt.-%, based on the total dry weight of the at least one calcium carbonate-containing filler material of step a); and at least one hydrophobizing agent of step ii) is added in contacting step c) in a total amount of from 0.1 to 3 wt.-%, preferably of from 0.2 to 2 wt.-% and most preferably of from 0.3 to 1 wt.-%, based on the total dry weight of the at least one calcium carbonate-containing filler material of step a).

15. The process for preparing the surface treated filler material product according to any of the preceding claims, wherein contacting step c) is carried out at a temperature of from 20 to 250 °C, preferably of from 60 to 180 °C and most preferably of from 80 to 150 °C.

16. The process for preparing the surface treated filler material product according to any of the preceding claims, wherein contacting step c) is carried out in that the maleic anhydride grafted polyethylene and/or maleic anhydride grafted polypropylene of step i) and at least one hydrophobizing agent of step ii) are added simultaneously or successively and preferably are added simultaneously, with the provision that if the compounds are added successively, the addiction of the first compound does not lead to a complete coverage of the surface of the at least one calcium carbonate-containing filler material.

17. A polymer composition comprising at least one polymeric resin and from 1 to 95 wt.-%, based on the total weight of the polymer composition, of a surface treated filler material product according to claims 1 to 10.

18. The polymer composition according to claim 17, further comprising
natural fibers, preferably wood fibers, cellulose fibers, hemp fibers and/or agricultural waste fibers and/or
synthetic fibers, preferably glass fibers, carbon fibers and/or aramid fibers.

19. A fiber and/or filament and/or film and/or thread and/or sheet and/or pipe and/or profile and/or mold and/or, injection molded compound and/or blow molded compound comprising a surface treated filler material product according to claims 1 to 10 and/or a polymer composition according to claims 17 or 18.

20. Use of a surface treated mineral filler product according to claims 1 to 10 in a polymer composition, preferably a polyethylene or polypropylene composition, for improving the mechanical and/or rheological properties of the polymer composition, in comparison to the same polymer composition that has been treated the same way, wherein the surface treated mineral filler product has merely been treated with at least one hydrophobizing agent.
